# EUROPEAN PATENT APPLICATION

(11) **EP 3 185 450 A1**
(43) Date of publication of application: **28.06.2017**
(21) Application number: 15758063.0
(22) Date of filing: 29.01.2015
(51) Int. Cl.: H04L 1/00

(54) **DATA PROCESSING IMPLEMENTATION METHOD, BASE STATION AND USER EQUIPMENT**

(30) Priority: 22.08.2014 CN 201410419912
(71) Applicant: ZTE Corporation, Shenzhen, Guangdong 518057 (CN)
(72) Inventor: MO, Linmei, Shenzhen Guangdong 518057 (CN); ZHAO, Yajun, Shenzhen Guangdong 518057 (CN); XU, Hanqing, Shenzhen Guangdong 518057 (CN)
(74) Representative: Savi, Massimiliano
(86) International application number: PCT/CN2015/071858
(87) International publication number: WO 2015/131730

(57) **Abstract**

Disclosed are a method for implementing data processing, a base station and a user equipment. The method includes: a base station determining to perform data transmission using an unlicensed carrier and notifying a UE of scheduling information; the UE determining that the base station pre-schedules the UE; the UE performing modulation coding according to the scheduling meanwhile the base station preempts an unlicensed carrier resource; and the UE sending data on which modulation coding has been performed on the preempted unlicensed carrier resource.

## Description

### Technical Field

The present invention relates to long term evolution technology and in particular to a method for implementing data processing, a base station and a user equipment.

### Background

Long Term Evolution Advanced (LTE/LTE-A) system is the 4th generation mobile communication standard formulated by the 3rd Generation Partnership Project (3GPP) organization. LTE/LTE-A system uses key transmission technologies such as Orthogonal Frequency Division Multiplexing (OFDM) and Multiple Input Multiple Output (MIMO) to improve spectrum efficiency and peak transmission rate. LTE supports various bandwidth allocations, such as 1.4MHz, 3MHz, 5MHz, 10MHz, 15MHz and 20MHz and so on, so that spectrum allocation is more flexible. LTE/LTE-A system currently mainly operates in licensed spectrum and the frequency bands selected by different regions may be different. For example, the North America network plans to use 700/800MHz and 1700/1900MHz; the European network plans to use 800, 1800 and 2600 MHz; the Asian network plans to use 1800MHz and 2600MHz; and the Australian network plans to use 1800MHz.

In order to support wider frequency bands, currently, LTE/LTE-A system introduces Carrier Aggregation (CA) technology, its basic idea is to aggregate a plurality of consecutive or discrete carriers together to form wider spectrum. Through carrier aggregation, LTE-A may support at most 100MHz bandwidth.

With continuous increasing of data services, the licensed spectrum resources are increasingly in short and crowded. In order to adapt to this change, the LTE/LTE-A system can be expanded to unlicensed spectrum resources for use with a method such as carrier aggregation with the aid of licensed carriers. However, on an unlicensed spectrum, except the LTE/LTE-A system, there are other systems such as WiFi, Radar and so on, and for the sake of fairness, various systems need to acquire resources through competition and release the acquired resource after occupation for some time, that is, a limited occupation time for the acquired resource shall be used efficiently.

On the other hand, the LTE/LTE-A system is a scheduling system, and there is some waiting time from scheduling to actual data transmission, such as 4ms. When using an unlicensed spectrum, this waiting time becomes a waste, and moreover, the spectrum resource may have been released within this period of time.

In addition, for data of which the sending is failed, the LTE/LTE-A system uses hybrid automatic retransmission request (HARQ) to perform data retransmission, and the maximum retransmission number is 4. When using an unlicensed spectrum, the spectrum resource may have been released while 4 retransmissions have not been finished.

Currently, for the scenario where the LTE/LTE-A system is expanded to an unlicensed spectrum resource for use, the data transmission device and sending method enable the data transmission and retransmission of the LTE system to efficiently use the limited occupation time on the unlicensed spectrum and process possible resource change conditions.

### Summary

In order to solve the above technical problems, a method for implementing data processing, a base station and a user equipment are provided according to embodiments of the present invention which can make the best of the limited occupation time of an unlicensed spectrum and improve the utilization of the preempted unlicensed spectrum resource.

A method for implementing data processing includes: a base station determining to perform data transmission using an unlicensed carrier; and notifying a user equipment (UE) of scheduling information.

In an exemplary embodiment, the method further includes: the UE determining that the base station pre-schedules the UE according to a received notification;
the UE performing modulation coding according to the scheduling and meanwhile the base station preempts an unlicensed carrier resource; and
the UE sending data on which modulation coding has been performed on the preempted unlicensed carrier resource.

In an exemplary embodiment, a base station determining to perform data transmission using an unlicensed carrier includes:
the base station deciding at any time to perform data transmission on the unlicensed carrier;
or determining to perform data transmission on the unlicensed carrier according to a usage condition of a licensed carrier.

In an exemplary embodiment, notifying the UE of scheduling information includes: notifying the UE of the scheduling information by sending control information to the UE.

In an exemplary embodiment, the base station notifies the UE implicitly or explicitly, herein
the notifying implicitly is: the base station notifying the UE of whether to perform data transmission using the unlicensed carrier through a carrier indication domain in the control information; and
the notifying explicitly is: the base station notifying the UE of whether to perform data transmission using the unlicensed carrier through a newly added pre-scheduling domain in the control information.

In an exemplary embodiment, the control information is sent through a physical downlink control channel (PDCCH) or an enhanced physical downlink control channel (EPDCCH).

In an exemplary embodiment, the base station notifies the UE implicitly, and the notifying implicitly is: the base station notifying the UE of whether to perform data transmission using the unlicensed carrier through a carrier indication domain in the control information;
if the control information sent by the base station does not include carrier indication domain, then it is indicated that current scheduling is normal scheduling; and
the UE determines whether a target carrier of the current scheduling is a licensed carrier or an unlicensed carrier according to the carrier indication domain in the control information from the base station, and if being a licensed carrier, then it is indicated that the current scheduling is normal scheduling.

In an exemplary embodiment, the UE determining that the base station pre-schedules the UE includes:
when the UE determines that the target carrier is an unlicensed carrier, the UE determining whether the unlicensed carrier resource has been preempted by the base station successfully, and if the unlicensed carrier has currently been preempted by the base station successfully, then it is indicated that current scheduling is normal scheduling, and if the unlicensed carrier has not currently been preempted by the base station successfully, then it is indicated that the current scheduling is pre-scheduling.

In an exemplary embodiment, the base station notifies the UE explicitly, and the notifying explicitly is: the base station notifying the UE of whether to perform data transmission using the unlicensed carrier through a newly added pre-scheduling domain in the control information;
if the newly added pre-scheduling domain shows that present scheduling is pre-scheduling, then it is indicated that the current scheduling is pre-scheduling; and
if the newly added pre-scheduling domain shows that present scheduling is normal scheduling, then it is indicated that the current scheduling is normal scheduling.

In an exemplary embodiment, the method further includes:
the base station initiating resource preemption on one or more unlicensed carriers, and meanwhile the base station starts a timer and waits for an unlicensed carrier resource preemption result, and if the preemption is successful, then the scheduling being normal scheduling and then performing the normal scheduling processing.

In an exemplary embodiment, the method further includes:
if the preemption is unsuccessful, the base station continuing to preempt a resource until the preemption is successful or notifying the UE that the current scheduling is pre-scheduling based on an unlicensed carrier, and continuing to perform the step of the UE performing modulation coding according to the scheduling meanwhile the base station preempts an unlicensed carrier resource;
or the base station performing scheduling on a licensed carrier and notifying the UE.

In an exemplary embodiment, the base station preempting an unlicensed carrier includes:
the UE starting a timer and waiting for the base station to preempt an unlicensed spectrum resource; and
before the timer has timed out, the base station attempting to preempt a resource on one or more unlicensed carriers, and if the base station has preempted an unlicensed spectrum resource on one carrier, the base station sending a preemption resource notification to the UE and then performing the step of the UE sending data on which modulation coding has been performed on the preempted unlicensed carrier resource.

In an exemplary embodiment, the method further includes:
if the timer has timed out and the base station has not preempted unlicensed carrier resource,
the UE attempting to perform scheduling and data transmission on a licensed spectrum resource, and if the licensed spectrum resource cannot be scheduled, then the UE continuing to wait for a scheduling chance on the licensed spectrum resource; and if the licensed spectrum resource can realize scheduling, then performing normal scheduling processing;
or, the UE restarting the timer and waiting for the base station to preempt a resource on one or more other unlicensed carriers until the base station has preempted a resource, and then performing the step of the UE sending data on which modulation coding has been performed on the preempted unlicensed carrier resource;
or the UE discarding this data and ending a current flow.

In an exemplary embodiment, the UE sending data on which modulation coding has been performed on the preempted unlicensed carrier resource includes:
after the UE receives an indication that the unlicensed carrier has been preempted, if the modulation coding has been performed, then sending the data on which modulation coding has been performed immediately using the preempted unlicensed carrier resource; and
if the modulation coding has not been performed, then after the UE has performed modulation coding, sending data on which modulation coding has been performed immediately using the preempted unlicensed carrier resource.

In an exemplary embodiment, the method further includes:
when the base station schedules another UE to perform data transmission on an unlicensed spectrum, the base station scheduling the UE and the other UE as a multi-user multi-input multi-output (MU-MIMO) mode;
the base station attempting to preempt a resource on one or more unlicensed carriers, and after the base station successfully preempts an unlicensed carrier resource, notifying the other UE; and
the base station scheduling the other UE to perform data transmission on the currently preempted unlicensed carrier during next scheduling.

In an exemplary embodiment, the method further includes:
if the base station has not preempted an unlicensed carrier resource, the other UE attempting to be scheduled as a single user mode on a licensed spectrum resource to perform data transmission;
or if the base station has not preempted an unlicensed carrier resource, the other UE attempting to continue to be scheduled together with the UE as a MU-MIMO mode on a licensed spectrum resource to perform data transmission; and if the licensed spectrum resource can realize scheduling, then the other UE performing normal scheduling processing;
or, if the base station has not preempted an unlicensed carrier resource, the other UE restarting the timer and waiting for the base station to continue to preempt a resource on one or more other unlicensed carriers until the base station has preempted a resource, and then the other UE sending data on which modulation coding has been performed on the preempted unlicensed carrier resource.

In an exemplary embodiment, the method further includes: the UE feeding back acknowledgement/non-acknowledgement (ACK/NACK) information to the base station on a licensed carrier or an unlicensed carrier.

In an exemplary embodiment, the UE feeding back ACK/NACK information to the base station on a licensed carrier or an unlicensed carrier includes:
if the base station has not preempted an unlicensed carrier resource, the UE feeding back ACK/NACK information to the base station on a licensed carrier;
or if the base station has preempted an unlicensed carrier resource,
if the UE is allowed to perform uplink sending on the unlicensed carrier and the unlicensed carrier resource is available, the UE feeding back ACK/NACK information of previous transmission to the base station on the unlicensed carrier through a physical uplink shared channel (PUSCH) or physical uplink control channel (PUCCH);
if the UE is not allowed to perform uplink sending on the unlicensed carrier or the unlicensed carrier resource is unavailable, the UE feeding back ACK/NACK information of previous transmission to the base station on the unlicensed carrier through PUSCH or PUCCH.

In an exemplary embodiment, the method further includes: the ACK/NACK information received by the base station showing that data sending is failed, the base station performing downlink scheduling and downlink retransmission on the UE, herein
the base station performing downlink scheduling and downlink retransmission on the UE includes:
after receiving the ACK/NACK information fed back by the UE, the base station demodulating and processing the ACK/NACK; and
scheduling retransmission data according to the demodulated and processed ACK/NACK information and downlink resource allocation condition.

In an exemplary embodiment, scheduling retransmission data according to the demodulated and processed ACK/NACK information and downlink resource allocation condition includes:
if the base station schedules the UE to receive downlink initial transmission data on a licensed carrier and the licensed carrier is available, the base station continuing to schedule the UE to receive downlink retransmission data on the licensed carrier; or the base station preempting an unlicensed carrier while receiving the ACK/NACK information fed back by the UE, and scheduling the UE to receive downlink retransmission data on the unlicensed carrier when the unlicensed carrier resource has been preempted;
or if the base station schedules the UE to receive downlink initial transmission data on an unlicensed carrier and the unlicensed carrier is available, the base station continuing to schedule the UE to receive downlink retransmission data on the unlicensed carrier;
or if the base station schedules the UE to receive downlink initial transmission data on an unlicensed carrier but the unlicensed carrier is unavailable, the base station preempting an unlicensed carrier while receiving the ACK/NACK information fed back by the UE, and scheduling the UE to receive downlink retransmission data on another unlicensed carrier when the other unlicensed carrier resource has been preempted;
or if the base station schedules the UE to receive downlink initial transmission data on an unlicensed carrier but the unlicensed carrier is unavailable, the base station scheduling the UE to receive downlink retransmission data on a licensed carrier;
or if there is no available resource, the base station abandoning downlink retransmission or terminating downlink retransmission.

In an exemplary embodiment, the method further includes:
when a carrier used to receive the downlink initial transmission data and a carrier used to receive the downlink retransmission data are different, the base station recalculating available subframe locations and resource blocks which can be used for downlink retransmission and notifying the UE through control information.

In an exemplary embodiment, the method further includes:
when a carrier used to receive the downlink initial transmission data and a carrier used to receive the downlink retransmission data are different, a Media Access Control (MAC) entity which manages an HARQ process mapping to the carrier of the downlink retransmission data.

In an exemplary embodiment, the method further includes: the base station feeding back ACK/NACK information to the UE on a licensed carrier or an unlicensed carrier.

In an exemplary embodiment, the base station feeding back ACK/NACK information to the UE on the licensed carrier or the unlicensed carrier includes:
the base station sending uplink scheduling to the UE through a control channel, herein the control channel includes PDCCH or enhanced physical downlink control channel (EPDCCH); and
the base station feeding back ACK/NACK information to the UE through the control channel on a licensed carrier or an unlicensed carrier, herein the control channel is a physical HARQ indication channel (PHICH).

In an exemplary embodiment, the method further includes: the ACK/NACK information showing that data sending is failed, the base station performing uplink scheduling and uplink retransmission on the UE, herein
the base station performing uplink scheduling and uplink retransmission on the UE includes:
after receiving the ACK/NACK information fed back by the base station, the UE demodulating and processing the ACK/NACK; and
under scheduling by the base station, performing uplink data retransmission according to the demodulated and processed ACK/NACK information and uplink resource allocation condition.

In an exemplary embodiment, under the scheduling by the base station, performing uplink data retransmission according to the demodulated and processed ACK/NACK information and uplink resource allocation condition includes:
if the base station schedules the UE to send uplink initial transmission data on a licensed carrier and the licensed carrier is available, the base station continuing to schedule the UE to send uplink retransmission data on the licensed carrier; or the base station preempting an unlicensed carrier while sending the ACK/NACK information to the UE and scheduling the UE to send uplink retransmission data on the unlicensed carrier when the unlicensed carrier resource has been preempted;
or if the base station schedules the UE to send uplink initial transmission data on an unlicensed carrier and the unlicensed carrier is available, the base station continuing to schedule the UE to send uplink retransmission data on the unlicensed carrier;
or if the base station schedules the UE to send uplink initial transmission data on an unlicensed carrier but the unlicensed carrier is unavailable, the base station preempting an unlicensed carrier while feeding back the ACK/NACK information to the UE and scheduling the UE to send uplink retransmission data on another unlicensed carrier when the other unlicensed carrier resource has been preempted;
or if the base station schedules the UE to send uplink initial transmission data on an unlicensed carrier but the unlicensed carrier is unavailable, the base station scheduling the UE to send uplink retransmission data on a licensed carrier;
or if there is no available resource, the base station abandoning uplink retransmission or terminating uplink retransmission.

In an exemplary embodiment, the method further includes:
when a carrier used to receive the uplink initial transmission data and a carrier used to receive the uplink retransmission data are different, the base station recalculating available subframe locations and resource blocks which can be used for uplink retransmission, and notifying the UE through control information.

In an exemplary embodiment, the method further includes:
when a carrier used to receive the uplink initial transmission data and a carrier used to receive the uplink retransmission data are different, an MAC entity which manages an HARQ process mapping to the carrier of the uplink retransmission data.

In an exemplary embodiment, the method further includes:
when the base station has preempted an unlicensed carrier resource, the base station sending a notification to the UE to notify the UE of a preemption result that an unlicensed carrier resource has been preempted, which indicates that the preempted unlicensed carrier information includes a carrier number, a channel number and a cell number corresponding to the carrier.

In an exemplary embodiment, the method further includes: before the UE sends data on which modulation coding has been performed on the preempted unlicensed carrier resource, if the unlicensed carrier resource is unavailable,
the base station notifying the UE that the unlicensed carrier has been released;
or the base station adjusting the UE to use a licensed carrier or reselect an available unlicensed carrier or re-preempt an unlicensed carrier.

A method for implementing data processing includes: when a base station schedules a UE of which an available carrier resource has changed to perform data transmission on an unlicensed carrier,
the base station scheduling a scheduled UE and the current UE of which an available carrier resource has changed as a multi-user multi-input multi-out (MU-MIMO) mode;
the base station attempting to preempt a resource on one or more unlicensed carriers, and after the base station successfully preempts an unlicensed carrier resource, notifying the UE of which an available carrier resource has changed; and
during next scheduling, the base station scheduling the UE of which an available carrier resource has changed to perform data transmission on the currently preempted unlicensed carrier.

In an exemplary embodiment, the method further includes:
if the base station has not preempted an unlicensed carrier resource, the UE of which an available carrier resource has changed attempting to be scheduled as a single user mode on a licensed spectrum resource to perform data transmission;
or if the base station has not preempted an unlicensed carrier resource, the UE of which an available carrier resource has changed attempting to continue to be scheduled together with the scheduled UE as a MU-MIMO mode on a licensed spectrum resource to perform data transmission; and if the licensed spectrum resource can realize scheduling, then the UE of which an available carrier resource has changed performing normal scheduling processing;
or, if the base station has not preempted an unlicensed carrier resource, the UE of which an available carrier resource has changed restarting a timer and waiting for the base station to continue to preempt a resource on one or more other unlicensed carriers until the base station has preempted a resource, and then the UE of which an available carrier resource has changed sending data on which modulation coding has been performed on the preempted unlicensed carrier resource.

A method for implementing data processing includes: a base station performing downlink scheduling and downlink initial transmission data sending on a licensed carrier or an unlicensed carrier;
the UE feeding back ACK/NACK information to the base station on a licensed carrier or an unlicensed carrier; and
the ACK/NACK information received by the base station showing that data sending is failed, the base station performing downlink scheduling and downlink retransmission on the UE.

In an exemplary embodiment, the UE feeding back ACK/NACK information to the base station on the licensed carrier or the unlicensed carrier includes:
if the base station has not preempted an unlicensed carrier resource, the UE feeding back ACK/NACK information to the base station on a licensed carrier;
or if the base station has preempted an unlicensed carrier resource,
if the UE is allowed to perform uplink sending on the unlicensed carrier and the unlicensed carrier resource is available, the UE feeding back ACK/NACK information of the previous transmission to the base station on the unlicensed carrier through a physical uplink shared channel (PUSCH) or physical uplink control channel (PUCCH);
if the UE is not allowed to perform uplink sending on the unlicensed carrier or the unlicensed carrier resource is unavailable, the UE feeding back ACK/NACK information of the previous transmission to the base station on the unlicensed carrier through PUSCH or PUCCH.

In an exemplary embodiment, the base station performing downlink scheduling and downlink retransmission on the UE includes:
after receiving the ACK/NACK information fed back by the UE, the base station demodulating and processing the ACK/NACK; and
scheduling retransmission data according to the demodulated and processed ACK/NACK information and downlink resource allocation condition.

In an exemplary embodiment, scheduling retransmission data according to the demodulated and processed ACK/NACK information and downlink resource allocation condition includes:
if the base station schedules the UE to receive downlink initial transmission data on a licensed carrier and the licensed carrier is available, the base station continuing to schedule the UE to receive downlink retransmission data on the licensed carrier; or the base station preempting an unlicensed carrier while receiving the ACK/NACK information fed back by the UE, and scheduling the UE to receive downlink retransmission data on the unlicensed carrier when the unlicensed carrier resource has been preempted;
or if the base station schedules the UE to receive downlink initial transmission data on an unlicensed carrier and the unlicensed carrier is available, the base station continuing to schedule the UE to receive downlink retransmission data on the unlicensed carrier;
or if the base station schedules the UE to receive downlink initial transmission data on an unlicensed carrier but the unlicensed carrier is unavailable, the base station preempting an unlicensed carrier while receiving the ACK/NACK information fed back by the UE, and scheduling the UE to receive downlink retransmission data on another unlicensed carrier when the other unlicensed carrier resource has been preempted;
or if the base station schedules the UE to receive downlink initial transmission data on an unlicensed carrier but the unlicensed carrier is unavailable, the base station scheduling the UE to receive downlink retransmission data on a licensed carrier;
or if there is no available resource, the base station abandoning downlink retransmission or terminating downlink retransmission.

In an exemplary embodiment, the method further includes:
when a carrier used to receive the downlink initial transmission data and a carrier used to receive the downlink retransmission data are different, the base station recalculating available subframe locations and resource blocks which can be used for downlink retransmission, and notifying the UE through control information.

In an exemplary embodiment, the method further includes:
when a carrier used to receive the downlink initial transmission data and a carrier used to receive the downlink retransmission data are different, an MAC entity which manages an HARQ process mapping to the carrier of the downlink retransmission data.

In an exemplary embodiment, the method further includes: when the base station has preempted an unlicensed carrier resource, the base station sending a notification to the UE to notify the UE of a preemption result that an unlicensed spectrum resource has been preempted, which indicates that the preempted unlicensed carrier information includes a carrier number, a channel number and a cell number corresponding to the carrier.

A method for implementing data processing includes:
a base station performing uplink scheduling on a licensed carrier or an unlicensed carrier and a UE sending uplink initial transmission data to the base station on a licensed carrier or an unlicensed carrier;
the base station feeding back ACK/NACK information to the UE on a licensed carrier or an unlicensed carrier; and
the ACK/NACK information showing that data sending is failed, and the method further includes: the base station performing uplink scheduling and uplink retransmission on the UE.

In an exemplary embodiment, the base station feeding back ACK/NACK information to the UE on a licensed carrier or an unlicensed carrier includes:
the base station sending uplink scheduling to the UE through a control channel, herein the control channel includes PDCCH or enhanced physical downlink control channel (EPDCCH); and
the base station feeding back ACK/NACK information to the UE through the control channel on a licensed carrier or an unlicensed carrier, herein the control channel is a physical HARQ indication channel (PHICH).

In an exemplary embodiment, the base station performing uplink scheduling and uplink retransmission on the UE includes:
after receiving the ACK/NACK information fed back by the base station, the UE demodulating and processing the ACK/NACK information; and
under scheduling by the base station, performing uplink data retransmission according to the demodulated and processed ACK/NACK information and uplink resource allocation condition.

In an exemplary embodiment, under scheduling by the base station, performing uplink data retransmission according to the demodulated and processed ACK/NACK information and uplink resource allocation condition includes:
if the base station schedules the UE to send uplink initial transmission data on a licensed carrier and the licensed carrier is available, the base station continuing to schedule the UE to send uplink retransmission data on the licensed carrier; or the base station preempting an unlicensed carrier while sending the ACK/NACK information to the UE, and scheduling the UE to send uplink retransmission data on the unlicensed carrier when the unlicensed carrier resource has been preempted;
or if the base station schedules the UE to send uplink initial transmission data on an unlicensed carrier and the unlicensed carrier is available, the base station continuing to schedule the UE to send uplink retransmission data on the unlicensed carrier;
or if the base station schedules the UE to send uplink initial transmission data on an unlicensed carrier but the unlicensed carrier is unavailable, the base station preempting an unlicensed carrier while feeding back the ACK/NACK information to the UE, and scheduling the UE to send uplink retransmission data on another unlicensed carrier when the other unlicensed carrier resource has been preempted;
or if the base station schedules the UE to send uplink initial transmission data on an unlicensed carrier but the unlicensed carrier is unavailable, the base station scheduling the UE to send uplink retransmission data on a licensed carrier;
or if there is no available resource, the base station abandoning uplink retransmission or terminating uplink retransmission.

In an exemplary embodiment, the method further includes: when the base station has preempted an unlicensed carrier resource, the base station sending a notification to the UE to notify the UE of a preemption result that an unlicensed carrier resource has been preempted, which indicates that the preempted unlicensed carrier information includes a carrier number, a channel number and a cell number corresponding to the carrier.

A base station includes:
a sending unit arranged to determine to perform data transmission using an unlicensed carrier and notify a UE of scheduling information;
a resource preemption unit arranged to preempt an unlicensed carrier resource; and
a scheduling unit arranged to schedule the UE to send data on which modulation coding has been performed on the preempted unlicensed carrier resource.

In an exemplary embodiment, the resource preemption unit is further arranged to preempt a resource on one or more other unlicensed carriers until the base station has preempted a resource.

In an exemplary embodiment, the sending unit is further arranged to notify the UE of a preemption result or release result of the unlicensed carrier.

In an exemplary embodiment, when the base station prepares to schedule another UE to perform data transmission on an unlicensed spectrum,
the scheduling module is further arranged to schedule the UE and another UE which is prepared to be scheduled currently as a MU-MIMO mode; the resource preemption unit is arranged to attempt to preempt a resource on one or more unlicensed carriers; the sending unit is further arranged to notify the other UE when the resource preemption unit successfully preempts the unlicensed carrier resource; and the scheduling module is further arranged to schedule the other UE to perform data transmission on the currently preempted unlicensed carrier during next scheduling.

In an exemplary embodiment, the base station further includes:
a receiving unit arranged to receive ACK/NACK information;
a demodulation and processing unit arranged to demodulate and process the ACK/NACK when the ACK/NACK information shows that data sending is failed; and
the scheduling unit is further arranged to schedule retransmission data according to the demodulated and processed ACK/NACK information and downlink resource allocation condition.

In an exemplary embodiment, when the scheduling unit schedules the UE to receive downlink initial transmission data on a licensed carrier and the licensed carrier is available, the scheduling unit continues to schedule the UE to receive downlink retransmission data on the licensed carrier; or the resource preemption unit preempts an unlicensed carrier while the receiving unit receives the ACK/NACK information fed back by the UE, and the scheduling unit schedules the UE to receive downlink retransmission data on an unlicensed carrier when the unlicensed carrier resource has been preempted;
or the scheduling unit is arranged to, when the UE is scheduled to receive downlink initial transmission data on an unlicensed carrier and the unlicensed carrier is available, continue to schedule the UE to receive downlink retransmission data on the unlicensed carrier;
or when the scheduling unit schedules the UE to receive downlink initial transmission data on an unlicensed carrier but the unlicensed carrier is unavailable, the resource preemption unit preempts an unlicensed carrier while the receiving unit receives the ACK/NACK information fed back by the UE, and the scheduling unit schedules the UE to receive downlink retransmission data on another unlicensed carrier when the other unlicensed carrier resource has been preempted;
or the scheduling unit is arranged to, when the base station schedules the UE to receive downlink initial transmission data on an unlicensed carrier but the unlicensed carrier is unavailable, schedule, by the base station, the UE to receive downlink retransmission data on a licensed carrier;
or the scheduling unit is arranged to, when there is no available resource, abandon or terminate, by the base station, downlink retransmission.

In an exemplary embodiment, the scheduling unit is further arranged to perform uplink scheduling on a licensed carrier or an unlicensed carrier and feed back ACK/NACK information to the UE on a licensed carrier or an unlicensed carrier;
when the fed back ACK/NACK information shows that data sending is failed,
schedule the UE to perform uplink data retransmission according to uplink resource allocation condition.

In an exemplary embodiment, when the scheduling unit schedules the UE to send uplink initial transmission data on a licensed carrier and the licensed carrier is available, the scheduling unit continues to schedule the UE to send uplink retransmission data on the licensed carrier; or the resource preemption unit preempts an unlicensed carrier while sending the ACK/NACK information to the UE, and the scheduling unit schedules the UE to send uplink retransmission data on the unlicensed carrier when the unlicensed carrier resource has been preempted;
or the scheduling unit is arranged to schedule, by the base station, the UE to send uplink initial transmission data on an unlicensed carrier and the unlicensed carrier is available, continue, by the base station, to schedule the UE to send uplink retransmission data on the unlicensed carrier;
or when the scheduling unit schedules the UE to send uplink initial transmission data on an unlicensed carrier but the unlicensed carrier is unavailable, the resource preemption unit preempts an unlicensed carrier while the scheduling unit feeds back ACK/NACK to the UE, and the resource scheduling unit schedules the UE to send uplink retransmission data on another unlicensed carrier when the other unlicensed carrier resource has been preempted;
or the scheduling unit is arranged to, when the UE is scheduled to send uplink initial transmission data on an unlicensed carrier but the unlicensed carrier is unavailable, schedule the UE to send uplink retransmission data on a licensed carrier;
or the scheduling unit is arranged to, when there is no available resource, abandon uplink retransmission or terminate uplink retransmission.

In an exemplary embodiment, before the scheduling unit schedules the UE to send data on which modulation coding has been performed on the preempted unlicensed carrier resource, if the unlicensed carrier resource is unavailable, the sending unit is further arranged to:
notify the UE that the unlicensed carrier has been released;
or the scheduling unit is further arranged to adjust the UE to use a licensed carrier or reselect an available unlicensed carrier or re-preempt an unlicensed carrier.

A user equipment includes:
a receiving unit arranged to receive scheduling information sent by a base station;
a modulation coding unit arranged to determine that the base station pre-schedules the user equipment according to the scheduling information and perform modulation coding according to the scheduling;
a sending unit arranged to send data on which modulation coding has been performed on an unlicensed carrier resource preempted by the base station.

In an exemplary embodiment, the sending unit is further arranged to send data on which modulation coding has been performed on a licensed carrier.

In an exemplary embodiment, the sending unit is further arranged to feed back ACK/NACK information to the base station on a licensed carrier or an unlicensed carrier.

In an exemplary embodiment, the receiving unit is further arranged to receive the ACK/NACK information fed back by the base station on a licensed carrier or an unlicensed carrier.

In an exemplary embodiment, the user equipment further includes:
a demodulation and processing unit arranged to demodulate and process the ACK/NACK information fed back by the base station;
when the ACK/NACK information fed back by the base station and received by the receiving unit shows that data sending is failed,
the sending unit is further arranged to, under scheduling by the base station, perform uplink data retransmission according to the demodulated and processed ACK/NACK information and uplink resource allocation condition.

An embodiment of the present invention also provides a computer-readable storage medium storing program instructions, which, when executed, are enabled to implement the above method.

Through the technical solution in the embodiments of the present invention, when a base station determines to perform data transmission on an unlicensed carrier, if the unlicensed carrier is not preempted temporarily, a UE performs modulation coding according to scheduling while preempting this unlicensed carrier, so that after the unlicensed carrier resource is preempted, data transmission process can be performed immediately or quickly on this unlicensed carrier resource and thus the limited occupation time of the unlicensed spectrum can be in full use, and the utilization of the preempted unlicensed spectrum resource is improved.

When the base station prepares to schedule another UE to perform data transmission on the unlicensed spectrum, the base station firstly schedules the previously scheduled first UE and the second UE which is currently prepared to be scheduled as a MU-MIMO mode; and at the meantime, the base station attempts to preempt a resource on one or more unlicensed carriers; and after the base station successfully preempts an unlicensed carrier resource, the second UE is scheduled to perform data transmission on the currently preempted unlicensed carrier during next scheduling. As such, the waiting time between uplink scheduling and uplink data sending is shortened and the problem that the unlicensed carrier preempted within the waiting time is preempted or released is avoided. Also, the limited occupation time of an unlicensed spectrum can be in full use, and the utilization of the preempted unlicensed spectrum resource is improved.

When the ACK/NACK information shows that data sending is failed and it requires to perform downlink/uplink data retransmission, through the a method for implementing data transmission provided in the present invention, when it requires to perform downlink/uplink data retransmission with an unlicensed carrier and no unlicensed carrier resource is preempted, the base station/UE demodulate and process the received ACK/NACK information, so that after an unlicensed carrier resource is preempted, data transmission, i.e., downlink/uplink data retransmission process, can be performed immediately or quickly on the unlicensed carrier resource, and thus the limited occupation time of an unlicensed spectrum can be in full use and the utilization of the preempted unlicensed spectrum resource is improved.

### Brief Description of Drawings

The accompanying drawings described here are used to provide further understanding of the present invention, which constitute a part of the present invention. The illustrative embodiments of the present invention and the description thereof are used to explain the present invention and do not constitute an improper limitation to the present invention. In the accompanying drawings:
Fig. 1 is a flowchart of a method for implementing data processing according to the present invention;
Fig. 2 is a constitution structure diagram of a system for implementing data processing according to the present invention;
Fig. 3 is a flowchart of a first embodiment of data processing implementation according to the present invention;
Fig. 4 is a flowchart of a second embodiment of data processing implementation according to the present invention;
Fig. 5 is a flowchart of a third embodiment of data processing implementation according to the present invention;
Fig. 6 is a flowchart of a fourth embodiment of data processing implementation according to the present invention; and
Fig. 7 is a flowchart of a fifth embodiment of data processing implementation according to the present invention.

### Detailed Description

In order to make the object, technical solution and advantages of the present invention more clear and understandable, the embodiments of the present invention will be described in detail in conjunction with the accompanying drawings hereinafter. It should be noted that the embodiments of the present invention and the features in the embodiments may be arbitrarily combined with each other without conflict.

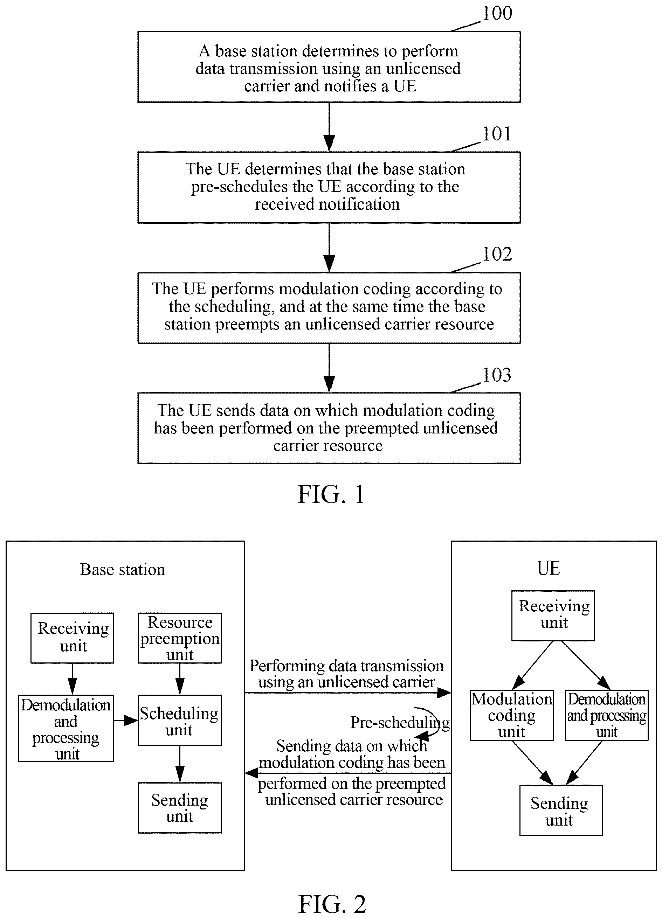

Fig. 1 is a flowchart of a method for implementing data processing according to the present invention. As shown in Fig. 1, a base station pre-schedules a targeted unlicensed carrier on a licensed carrier, specifically including the following steps.

In step 100, a base station determines to perform data transmission using an unlicensed carrier and notifies a UE of scheduling information.

In this step, the base station may decide to perform data transmission on an unlicensed carrier at any time.

It may also determine to perform data transmission on an unlicensed carrier according to the usage condition of the licensed carrier. For example, it determines whether to perform data transmission on an unlicensed carrier according to the load of the current licensed carrier. For example, if the RB occupation rate of the current licensed carrier reaches a preset first threshold or the OI value of the current licensed carrier is greater than a preset second threshold, the base station determines to schedule the UE to perform data transmission on an unlicensed carrier, i.e., determining to perform data transmission using an unlicensed carrier.

In this step, the base station may notify the UE by sending control information to the UE, herein the control information may be physical downlink control channel (PDCCH) or enhanced physical downlink control channel (EPDCCH) and so on, and the base station may notify the UE explicitly or implicitly.

Notifying implicitly is that: the base station notifies the UE of whether to perform data transmission using an unlicensed carrier through the carrier indication domain in the control information such as PDCCH or EPDCCH, herein LTE currently supports at most 5 carrier aggregations, the carrier indication domain is of 3 Bits for indicating a carrier in a CA scenario, here, the carrier indication domain may follow the 3Bit carrier indication domain in LTE to indicate whether to use an unlicensed carrier, and of course, it may also be redefined as a new carrier indication domain as long as it is sufficient for indication, and the particular implementation can be readily implemented by those skilled in the art, which will not be described here.

Notifying explicitly is: the base station notifies the UE of whether to perform data transmission using the unlicensed carrier through a newly added pre-scheduling domain in the control information, such as a newly added pre-scheduling domain in the DCI format carried by PDCCH.

The unlicensed carrier which may be used by the above indication may be a target unlicensed carrier and may also be a target unlicensed carrier set.

It should be noted that implicit notification or explicit notification may be sent through a licensed carrier and may also be sent through a preempted available unlicensed carrier.

The method further includes the following steps.

In step 101, the UE determines that the base station pre-schedules the UE according to the received notification.

In this step, if the base station notifies the UE implicitly, the UE determining that the base station pre-schedules the UE specifically includes:
if the control information sent by the base station does not include carrier indication domain, then it is indicated that the current scheduling is normal scheduling; and
the UE determines whether the target carrier of the current scheduling is a licensed carrier or an unlicensed carrier according to the carrier indication domain in the control information from the base station, and if it is a licensed carrier, then it is indicated that the current scheduling is normal scheduling; and
if the target carrier is an unlicensed carrier, then the UE further determines whether this unlicensed carrier resource has been occupied, and if this unlicensed carrier has been preempted successfully by the base station which initiates scheduling, then it is indicated that the current scheduling is normal scheduling, and if this unlicensed carrier has not been preempted successfully by the base station which initiates scheduling, then it is indicated that the current scheduling is pre-scheduling.

If the base station notifies the UE explicitly, the UE determining that the base station pre-schedules the UE specifically includes: if the newly added pre-scheduling domain in the control information, for example, the newly added pre-scheduling domain in the DCI format carried by the PDCCH shows that the current scheduling is normal scheduling, then it is indicated that the current scheduling is normal scheduling; and if the newly added pre-scheduling domain shows that the current scheduling is pre-scheduling, then it is indicated that the current scheduling is pre-scheduling.

If it is determined that the current scheduling is normal scheduling, then this step further includes normal scheduling processing: the UE performs modulation coding and data transmission according to the scheduling of the base station, taking the control information being PDCCH as an example, specifically, after receiving PDCCH notification, the UE performs modulation coding and performs uplink data transmission on the k^{th} subframe after receiving PDCCH. Then, the flow is ended. Herein, the modulation coding includes performing modulation coding according to control information indication. For example, modulation coding is performed according to the received modulation coding scheme indicated by PDCCH and Modulation and coding scheme and redundancy version (MCS), and the specific implementation is well-known to those skilled in the art and is not intended to limit the protection scope of the present invention, which will not be described here.

It should be noted that before determining that it is normal scheduling, the method further includes:
the base station initiates resource preemption on one or more unlicensed carriers, such as CC1, CC2, ..., CCn. At the same time, the base station initiates a timer and waits for an unlicensed carrier resource preemption result, and if the preemption is successful, then it is determined in the determination of this step that the current scheduling is normal scheduling and then normal scheduling processing will be performed.

If the preemption is failed, then the base station may continue to preempt a resource until the preemption is successful or notify the UE that the current scheduling is pre-scheduling based on unlicensed carrier; or the base station performs scheduling on a licensed carrier A_CC and notifies the UE, at this moment, the determination in this step will determine that the current scheduling is normal scheduling and then normal scheduling processing will be performed.

Alternatively, when preempting and releasing an unlicensed carrier, the base station will notify the UE of the preemption result or release result so that the UE learns the occupation condition of the unlicensed carrier resource.

In step 102, the UE performs modulation coding according to the scheduling, and at the same time the base station preempts an unlicensed carrier resource.

In this step, the UE performing modulation coding according to the scheduling is a conventional technical manner for those skilled in the art, and the specific implementation is not intended to limit the protection scope of the present invention, which will not be described here.

The base station preempting an unlicensed carrier resource in case of pre-scheduling in this step specifically includes:
the UE starts a timer and waits for the base station to preempt an unlicensed spectrum resource. Before the timer has timed out, the base station attempts to preempt resource on one or more unlicensed carriers, such as CC1, CC2, ..., CCn, and the base station has preempted an unlicensed spectrum resource on one carrier, assuming it is CC1, then the base station sends a notification to the UE, for example, sending control information such as PDCCH to notify the UE of the preemption result that an unlicensed spectrum resource has been preempted, which indicates that the preempted unlicensed carrier information includes a carrier number, a channel number and so on, then step 103 will be performed.

If the timer has timed out and the base station has not preempted an unlicensed carrier resource, then this step further includes:
the UE attempts to perform scheduling and data transmission on a licensed spectrum resource, and if the licensed spectrum resource cannot be scheduled, then the UE continues to wait for a scheduling chance on the licensed spectrum resource; and if the licensed spectrum resource can realize scheduling, then normal scheduling processing will be performed;
or, the UE restarts the timer and waits for the base station to preempt resource on one or more other unlicensed carriers, such as preempting resource on CCn+1, CCn+2, ..., CCn+m, which can be repeated multiple times, until the base station has preempted a resource and then step 103 will be performed;
or the UE discards this data and this flow is ended.

For these processing, the UE may select a high priority for processing according to a preset preferential processing order; or the base station may indicate the UE to use which way for processing. The specific implementation can be readily implemented by those skilled in the art according to the method recorded in the present invention, which will not be described here.

In step 103, the UE sends data on which modulation coding has been performed on the preempted unlicensed carrier resource. It specifically includes:
after receiving the PDCCH indication, if the modulation coding is completed, then the UE immediately uses the preempted unlicensed carrier resource to send data on which modulation coding has been performed; and if the modulation coding is not completed, then after completing modulation coding, the UE immediately uses the preempted unlicensed carrier resource to send the data on which modulation coding has been performed.

Before performing step 103, if the preempted unlicensed carrier resource is unavailable, the method further includes:
the base station notifies the UE that the currently preempted unlicensed carrier has been released;
or the base station adjusts the carrier resource used by the UE, such as to use a licensed carrier, or reselect a currently available unlicensed carrier or re-preempt another unlicensed carrier.

It can be seen from the method for implementing data processing shown in Fig. 1 that, when a base station determines to perform data transmission on an unlicensed carrier, if the unlicensed carrier is not preempted temporarily, a UE performs modulation coding according to the scheduling while the base station preempts this unlicensed carrier, so that after the unlicensed carrier resource is preempted, a data transmission process on this unlicensed carrier resource can be performed immediately or quickly, and thus the limited occupation time of the unlicensed spectrum can be in full use and the utilization of the preempted unlicensed spectrum resource is improved.

For a UE of which the available carrier resource has changed, when the base station prepares to schedule a UE (also referred to as second UE) of which the available carrier resource has changed to perform data transmission on an unlicensed carrier, the method according to the present invention further includes:
the base station schedules the previously scheduled first UE (scheduling may be performed on an unlicensed carrier or a licensed carrier) and the second UE which is prepared to be scheduled currently as a MU-MIMO mode; the base station attempts to preempt a resource on one or more unlicensed carriers; and after the base station successfully preempts an unlicensed carrier resource, the base station notifies the UE of the preemption result that an unlicensed spectrum resource has been preempted by sending control information such as PDCCH, indicating that the preempted unlicensed carrier information includes a carrier number, a channel number and so on, so that the base station schedules the second UE to perform data transmission on the currently preempted unlicensed carrier during next scheduling. It should be noted that if the base station has not preempted an unlicensed carrier resource at this moment, the method further includes:
   the second UE may attempt to be scheduled as a single user mode on a licensed spectrum resource to perform data transmission, or the second UE may attempt to continue to be scheduled together with the first UE as a MU-MIMO mode on a licensed spectrum resource to perform data transmission; and if the licensed spectrum resource can realize scheduling, then the second UE performs normal scheduling processing;
   or, the second UE restarts the timer and waits for the base station to preempt a resource on one or more other unlicensed carriers, such as CCn+1, CCn+2, ..., CCn+m, which may be repeated multiple times until the base station has preempted a resource, and then the second UE may send data on which modulation coding has been performed on the preempted unlicensed carrier resource.

Based on the technical solution provided according to the present invention, the base station may perform downlink scheduling and downlink data (also referred to as downlink initial transmission data) sending on a licensed carrier or an unlicensed carrier, and the UE may feed back ACK/NACK information to the base station on a licensed carrier or an unlicensed carrier.

Specifically,
if the base station has not preempted an unlicensed carrier resource, the UE feeds back ACK/NACK information to the base station on a licensed carrier;
or if the base station has preempted an unlicensed carrier resource, then
if the UE is allowed to perform uplink sending on the unlicensed carrier and the unlicensed carrier resource is available, the UE may feed back ACK/NACK information of the previous transmission to the base station on the unlicensed carrier through a physical uplink shared channel (PUSCH) or physical uplink control channel (PUCCH); and
if the UE is not allowed to perform uplink sending on the unlicensed carrier or the unlicensed carrier resource is unavailable, the UE feeds back ACK/NACK information of the previous transmission to the base station on the unlicensed carrier through PUSCH or PUCCH.

Similarly, feedback can be performed implicitly or explicitly, the specific implementation will not be described here.

If the ACK/NACK information received by the base station shows that data sending is failed, another method for implementing data transmission according to the present invention includes: the base station performs downlink scheduling and downlink retransmission on the UE, i.e.,
after receiving the ACK/NACK information fed back by the UE, the base station demodulates and processes the ACK/NACK information, and the base station schedules the retransmission data according to the demodulated and processed ACK/NACK information and downlink resource allocation condition.

Specifically,
demodulating and processing ACK/NACK is a conventional technical manner for those skilled in the art, and the specific implementation is not intended to limit the protection scope of the present invention, which will not be described here.

Scheduling the retransmission data according to the demodulated and processed ACK/NACK information and downlink resource allocation condition includes:
if the base station schedules the UE to receive downlink initial transmission data on a licensed carrier and the licensed carrier is available, then the base station may continue to schedule the UE to receive downlink retransmission data on the licensed carrier; or the base station may preempt an unlicensed carrier while receiving the ACK/NACK information fed back by the UE, and schedule the UE to receive downlink retransmission data on the unlicensed carrier when the unlicensed carrier resource has been preempted;
or if the base station schedules the UE to receive downlink initial transmission data on an unlicensed carrier and the unlicensed carrier is available, the base station may continue to schedule the UE to receive downlink retransmission data on the unlicensed carrier;
or if the base station schedules the UE to receive downlink initial transmission data on an unlicensed carrier but the unlicensed carrier is unavailable, the base station may preempt an unlicensed carrier while receiving the ACK/NACK information fed back by the UE and schedule the UE to receive downlink retransmission data on another unlicensed carrier when the other unlicensed carrier resource has been preempted;
or if the base station schedules the UE to receive downlink initial transmission data on an unlicensed carrier but the unlicensed carrier is unavailable, the base station may schedule the UE to receive downlink retransmission data on a licensed carrier;
or if there is no available resource, the base station may abandon downlink retransmission or terminate downlink retransmission.

Similarly, feedback can be performed implicitly or explicitly, the specific implementation will not be described here.

If the base station has preempted an unlicensed carrier resource, the base station sends a notification to the UE, for example, sending control information such as PDCCH or EPDCCH to notify the UE of the preemption result that an unlicensed spectrum resource has been preempted, which indicates that the preempted unlicensed carrier information includes a carrier number, a channel number and so on.

Moreover, the base station sends control information to schedule the UE to receive downlink retransmission data on a preempted unlicensed spectrum resource, here, the control information may be PDCCH or EPDCCH.

Herein, the base station preempting an unlicensed carrier may be to initiate resource preemption on one or more unlicensed carriers. When the base station preempts unlicensed carrier, a timer may be started for waiting for the unlicensed spectrum resource preemption result. If the timer has timed out, then it is considered that the base station cannot preempt an unlicensed carrier and may continue to perform retransmission on a licensed carrier or abandon retransmission.

Alternatively, the resource preemption initiated by the base station on one or more unlicensed carriers is high-priority resource preemption, for example the idle frame listening waiting time of the unlicensed carrier resource can be shortened.

If there is no available resource, the base station may abandon downlink retransmission or terminate downlink retransmission, specifically,
if downlink retransmission is not started, the base station may abandon downlink retransmission;
if downlink retransmission has started, the base station may abandon the current and all of the subsequent downlink retransmissions. At this moment, before next downlink retransmission, the base station may also continue to preempt unlicensed carrier resource, and at this moment, the UE starts the timer, and if the base station has preempted an unlicensed carrier resource before the timer has timed out, then the base station performs this downlink retransmission; and if the base station has not preempted unlicensed carrier resource before the timer has timed out, waiting for the next downlink retransmission moment, the UE which attempts to preempt an unlicensed carrier resource restarts the timer until the maximum downlink retransmission number is reached.

It should be noted that, in the downlink data retransmission according to the embodiments of the present invention, if the carrier used to receive the downlink initial transmission data and the carrier used to receive the downlink retransmission data are different, the method further includes:
the base station recalculates available subframe locations and resource blocks which can be used for downlink retransmission, and it should be noted that, although the carrier may change but the available subframe locations are unchanged, thus the situation where the used RB number and subframe locations are unchanged may be included and it is notified to the UE through control information. The specific implementation is a conventional technical manner for those skilled in the art and is not intended to limit the protection scope of the present invention, which will not be described here.

It should be noted that, in the downlink data retransmission according to the embodiments of the present invention, if the carrier used to receive the downlink initial transmission data and the carrier used to receive the downlink retransmission data are different, the method further includes:
an MAC entity managing an HARQ process maps to the carrier of the uplink retransmission data with the change of the carrier used for downlink retransmission data.

If the ACK/NACK information received by the base station shows that data sending is failed and it requires to perform downlink data retransmission, through the method for implementing data transmission provided in the present invention, when it requires to perform downlink data retransmission with an unlicensed carrier and no unlicensed carrier resource is preempted, the base station demodulates and processes the received ACK/NACK information at the same time, so that after an unlicensed carrier resource is preempted, data transmission on the unlicensed carrier resource, i.e., downlink data retransmission process, can be performed immediately or quickly, and thus the limited occupation time of an unlicensed spectrum can be in full use and the utilization of the preempted unlicensed spectrum resource is improved.

Based on the technical solution provided according to the present invention, the base station may perform uplink scheduling on a licensed carrier or an unlicensed carrier, and the UE may send uplink data (also referred to as uplink initial transmission data) to the base station on a licensed carrier or an unlicensed carrier; and the base station may feed back ACK/NACK information to the UE on a licensed carrier or an unlicensed carrier.

Specifically,
the base station may send uplink scheduling to the UE through a control channel, herein the control channel includes Physical Downlink Control Channel (PDCCH ) or Enhanced Physical Downlink Control Channel (EPDCCH ).

The base station may feed back ACK/NACK information to the UE through the control channel on a licensed carrier or an unlicensed carrier, herein the control channel may be Physical Hybrid ARQ Indicator Channel (PHICH). Similarly, indication can be performed implicitly or explicitly, the particular implementation will not be described here.

If the ACK/NACK information shows that data sending is failed, another method for implementing data transmission according to the present invention includes: the base station performs uplink scheduling and uplink retransmission on the UE, i.e.,
after receiving the ACK/NACK information fed back by the base station, the UE demodulates and processes ACK/NACK, and under the scheduling of the base station, the UE performs uplink data retransmission according to the demodulated and processed ACK/NACK information and uplink resource allocation condition.

Specifically,
demodulating and processing ACK/NACK is a conventional technical manner for those skilled in the art and the particular implementation is not intended to limit the protection scope of the present invention, which will not be described here.

Under the scheduling by the base station, the UE performing uplink data retransmission according to the demodulated and processed ACK/NACK information and uplink resource allocation condition includes:
if the base station schedules the UE to send uplink initial transmission data on a licensed carrier and the licensed carrier is available, then the base station may continue to schedule the UE to send uplink retransmission data on the licensed carrier; or the base station may preempt unlicensed carrier while sending the ACK/NACK information to the UE and schedule the UE to send uplink retransmission data on the unlicensed carrier when the unlicensed carrier resource has been preempted;
or if the base station schedules the UE to send uplink initial transmission data on an unlicensed carrier and the unlicensed carrier is available, then the base station may continue to schedule the UE to send uplink retransmission data on the unlicensed carrier;
or if the base station schedules the UE to send uplink initial transmission data on an unlicensed carrier but the unlicensed carrier is unavailable, then the base station may preempt an unlicensed carrier while feeding back the ACK/NACK information to the UE and schedule the UE to send uplink retransmission data on another unlicensed carrier when the other unlicensed carrier resource has been preempted;
or if the base station schedules the UE to send uplink initial transmission data on an unlicensed carrier but the unlicensed carrier is unavailable, then the base station may schedule the UE to send uplink retransmission data on a licensed carrier;
or if there is no available resource, the base station may abandon uplink retransmission or terminate uplink retransmission.

If the base station has preempted an unlicensed carrier resource, the base station sends a notification to the UE, for example, sending control information such as PDCCH, and notifies the UE of the preemption result that an unlicensed spectrum resource has been preempted, which indicates that the preempted unlicensed carrier information includes a carrier number, a channel number and a cell number corresponding to the carrier.

Moreover, the base station sends control information to schedule the UE to send uplink retransmission data on a preempted unlicensed spectrum resource, here, the control information may be PDCCH or EPDCCH.

Herein, the base station preempting an unlicensed carrier may be to initiate resource preemption on one or more unlicensed carriers. When the base station preempts an unlicensed carrier, a timer may be started for waiting for the unlicensed spectrum resource preemption result.

Alternatively, the resource preemption initiated by the base station on one or more unlicensed carriers is high-priority resource preemption, for example the idle frame listening waiting time of the unlicensed carrier resource can be shortened.

If there is no available resource, the base station may abandon uplink retransmission or terminate uplink retransmission, specifically,
if uplink retransmission is not started, the base station may abandon uplink retransmission;
if uplink retransmission has started, the base station may abandon the current and all of the subsequent uplink retransmissions. At this moment, before next uplink retransmission, the base station may also continue to preempt an unlicensed carrier resource, and at this moment, the UE starts the timer, and if the base station has preempted an unlicensed carrier resource before the timer has timed out, then the base station performs this uplink retransmission; and if the base station has not preempted an unlicensed carrier resource before the timer has timed out, waiting for the next uplink retransmission moment, the UE which attempts to preempt an unlicensed carrier resource restarts the timer until the maximum uplink retransmission number is reached.

It should be noted that, in the uplink data retransmission according to the embodiments of the present invention, if the carrier used to receive the uplink initial transmission data and the carrier used to receive the uplink retransmission data are different, the method further includes:
the base station recalculates available subframe locations and resource blocks which can be used for downlink retransmission and notifies the UE through control information.

If the carrier used to receive the uplink initial transmission data and the carrier used to receive the uplink retransmission data are different, the method further includes:
an MAC entity managing an HARQ process maps to the carrier of the uplink retransmission data.

If the ACK/NACK information shows that data sending is failed and it requires to perform uplink data retransmission, through the method for implementing data transmission provided in the present invention, when it requires to perform uplink data retransmission with an unlicensed carrier and no unlicensed carrier resource is preempted, the UE demodulates and processes the received ACK/NACK information at the same time, so that after an unlicensed carrier resource is preempted, data transmission on the unlicensed carrier resource, i.e., uplink data retransmission process, may be performed immediately or quickly, and thus the limited occupation time of an unlicensed spectrum can be in full use and the utilization of the preempted unlicensed spectrum resource is improved.

Fig. 2 is a constitution structure diagram of a data processing implementation system according to an embodiment of the present invention. As shown in Fig. 2, it includes a base station and a UE.

The base station includes:
a sending unit arranged to determine to perform data transmission using an unlicensed carrier and notify a UE of scheduling information;
a resource preemption unit arranged to preempt an unlicensed carrier resource; and
a scheduling unit arranged to schedule the UE to send data on which modulation coding has been performed on the preempted unlicensed carrier resource.

The UE includes:
a receiving unit arranged to receive scheduling information sent by a base station;
a modulation coding unit arranged to determine that the base station pre-schedules the user equipment according to the scheduling information and perform modulation coding according to the scheduling; and
a sending unit arranged to send data on which modulation coding has been performed on an unlicensed carrier resource preempted by the base station.

The sending unit of the UE is further arranged to send data on which modulation coding has been performed on an licensed carrier.

Alternatively, the resource preemption unit of the base station is further arranged to preempt resource on one or more other unlicensed carriers until the base station has preempted a resource.

Alternatively, the sending unit of the base station is further arranged to notify the UE of a preemption result or release result when preempting or releasing the unlicensed carrier.

When the base station prepares to schedule another UE to perform data transmission on an unlicensed spectrum,
in the base station, the scheduling unit schedules the previously scheduled first UE and the second UE which are currently prepared to be scheduled as a MU-MIMO mode; and the resource preemption unit attempts to preempt a resource on one or more unlicensed carriers; and after an unlicensed carrier resource is successfully preempted, the sending unit notifies the second UE; and the scheduling unit schedules the second UE to perform data transmission on the currently preempted unlicensed carrier during next scheduling.

Alternatively, the sending unit of the UE is further arranged to feed back ACK/NACK information to the base station on a licensed carrier or an unlicensed carrier.

If the ACK/NACK information received by the base station shows that data sending is failed,
the demodulation and processing unit of the base station demodulates and processes the ACK/NACK information, and the scheduling unit schedules the retransmission data according to the demodulated and processed ACK/NACK information and downlink resource allocation condition.

If the scheduling unit schedules the UE to receive downlink initial transmission data on a licensed carrier and the licensed carrier is available, it continues to schedule the UE to receive downlink retransmission data on the licensed carrier; or the resource preemption unit preempts unlicensed carrier while the receiving unit of the base station receives the ACK/NACK information fed back by the UE, and the scheduling unit schedules the UE to receive downlink retransmission data on an unlicensed carrier when the resource preemption unit has preempted the unlicensed carrier resource;
or if the UE is scheduled to receive downlink initial transmission data on an unlicensed carrier and the unlicensed carrier is available, the scheduling unit continues to schedule the UE to receive downlink retransmission data on the unlicensed carrier;
or if the scheduling unit schedules the UE to receive downlink initial transmission data on an unlicensed carrier but the unlicensed carrier is unavailable, the resource preemption unit preempts an unlicensed carrier while the receiving unit of the base station receives the ACK/NACK information fed back by the UE, and the scheduling unit schedules the UE to receive downlink retransmission data on another unlicensed carrier when the other unlicensed carrier resource has been preempted;
or if the UE is scheduled to receive downlink initial transmission data on an unlicensed carrier but the unlicensed carrier is unavailable, the scheduling unit schedules the UE to receive downlink retransmission data on a licensed carrier;
or if there is no available resource, the scheduling unit abandons downlink retransmission or terminates downlink retransmission.

Alternatively, the scheduling unit performs uplink scheduling on a licensed carrier or an unlicensed carrier and feeds back ACK/NACK information to the UE on a licensed carrier or an unlicensed carrier; and the sending unit of the UE further sends uplink data to the base station on a licensed carrier or an unlicensed carrier.

If the ACK/NACK information fed back by the base station received by the UE shows that data sending is failed,
the demodulation and processing unit of the UE demodulates and processes the ACK/NACK information, and under the scheduling by the base station, the sending unit performs uplink data retransmission according to the demodulated and processed ACK/NACK information and uplink resource allocation condition;
the sending unit of the base station is further arranged to schedule the UE to perform uplink data retransmission according to uplink resource allocation condition,
if the scheduling unit schedules the UE to send uplink initial transmission data on a licensed carrier and the licensed carrier is available, the scheduling unit continues to schedule the UE to send uplink retransmission data on the licensed carrier; or the resource preemption unit preempts an unlicensed carrier while the sending unit of the base station sends the ACK/NACK information to the UE, and the scheduling unit schedules the UE to send uplink retransmission data on the unlicensed carrier when the unlicensed carrier resource has been preempted;
or the scheduling unit schedules the UE to send uplink initial transmission data on an unlicensed carrier and the unlicensed carrier is available, the scheduling unit continues to schedule the UE to send uplink retransmission data on the unlicensed carrier;
or if the scheduling unit schedules the UE to send uplink initial transmission data on an unlicensed carrier but the unlicensed carrier is unavailable, the resource preemption unit preempts an unlicensed carrier while the sending unit of the base station feeds back ACK/NACK information to the UE, and the scheduling unit schedules the UE to send uplink retransmission data on another unlicensed carrier when the other unlicensed carrier resource has been preempted;
or if the scheduling unit schedules the UE to send uplink initial transmission data on an unlicensed carrier but the unlicensed carrier is unavailable, the scheduling unit schedules the UE to send uplink retransmission data on a licensed carrier;
or if there is no available resource, the scheduling unit schedules the UE to abandon uplink retransmission or terminates uplink retransmission.

Before scheduling the UE to send data on which modulation coding has been performed on the preempted unlicensed carrier resource, if the unlicensed carrier resource is unavailable, the sending unit notifies the UE that the unlicensed carrier has been released;
or the scheduling unit adjusts the UE to use a licensed carrier or reselect an available unlicensed carrier or the resource preemption unit re-preempts an unlicensed carrier.

Hereinafter, the method according to an embodiment of the present invention will be described in detail in combination with specific embodiments.

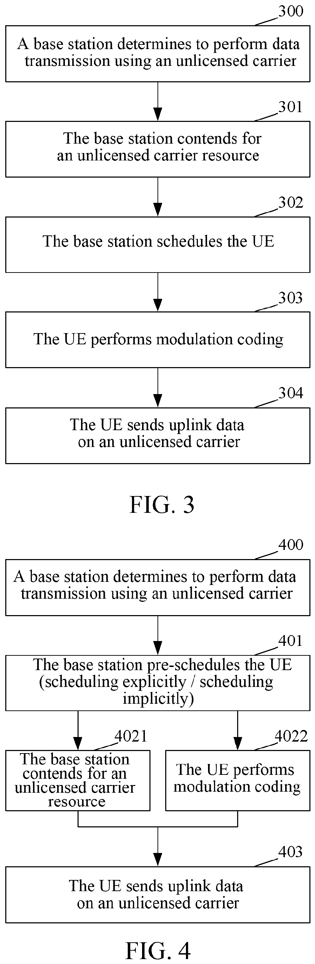

Fig. 3 is a flowchart of a first embodiment of data processing implementation according to the present invention. The first embodiment is a normal scheduling processing flow, and as shown in Fig. 3, includes the following steps.

In step 300, a base station determines to perform data transmission using an unlicensed carrier.

In this step, the base station preparing to schedule a UE to send data on an unlicensed carrier can be that the base station decides to send data on an unlicensed carrier anytime or the base station decides to schedule the UE to send data on an unlicensed carrier by determining the load on the licensed carrier, for example, the RB occupation rate has reached a certain preset threshold or the OI value is greater than a certain preset threshold.

In step 301, the base station contends for an unlicensed carrier resource and notifies the UE of the contention result.

It is assumed that the base station initiates resource preemption on one or more unlicensed carriers, such as CC1, CC2, ..., CCn. At the same time, the base station starts a timer and waits for the unlicensed spectrum resource preemption result.

If the preemption is failed, then the base station continues to preempt resource; or the base station performs scheduling on a licensed carrier A_CC.

If the base station has preempted an unlicensed spectrum resource on one carrier, it is assumed that the base station has preempted an unlicensed carrier CC1, then it sends control information to the UE, such as PDCCH/EPDCCH, to notify the UE of the resource contention result. The resource contention result includes: indicating whether the base station has preempted an unlicensed carrier resource; indicating the preempted unlicensed carrier information, including a carrier number and a channel number and so on.

In step 302, the base station schedules the UE, i.e., scheduling the UE to perform uplink data sending.

If in step 302, the unlicensed carrier resource preemption is failed, then the base station continues to preempt resource; or the base station performs scheduling on a licensed carrier A_CC.

If in step 301, the base station has preempted an unlicensed spectrum resource on one carrier, it is assumed that the base station has preempted an unlicensed carrier CC1, then the base station sends PDCCH to schedule the UE.

In step 303, after receiving the PDCCH notification, the UE performs modulation coding.

In step 304, the UE may perform uplink data sending on the k^{th} subframe after receiving the PDCCH notification.

Fig. 4 is a flowchart of a second embodiment of data processing implementation according to the present invention. The second embodiment is a pre-scheduling processing flow, and as shown in Fig. 4, includes the following steps.

In step 400, a base station determines to perform data transmission using an unlicensed carrier.

In this step, the base station preparing to schedule the UE to send data on an unlicensed carrier can be that the base station decides to send data on an unlicensed carrier anytime or the base station decides to schedule the UE to send data on an unlicensed carrier by determining the load on the licensed carrier, for example, the RB occupation rate has reached a certain preset threshold or the OI value is greater than a certain preset threshold.

In step 401, the base station pre-schedules the UE.

In this step, the base station may pre-schedules the UE using a licensed carrier or a successfully preempted unlicensed carrier. The base station may pre-schedule the UE explicitly or implicitly.

Scheduling implicitly may be:
the base station sends control information such as PDCCH to schedule the UE, and the UE determines whether this is a licensed carrier or an unlicensed carrier according to the carrier indication domain therein; and if it is a licensed carrier, then this is a normal scheduling and the UE performs modulation coding and data sending according to the scheduling of the base station and this flow is ended; and if this is an unlicensed carrier, then the UE further determines whether this is a normal scheduling or a pre-scheduling according to the occupation condition of the unlicensed carrier resource:
   if the unlicensed carrier is currently preempted successfully by the base station, it is indicated that this is a normal scheduling and the UE performs modulation coding and data sending according to the scheduling of the base station and this flow is ended; and
   if the unlicensed carrier is currently not preempted successfully by the base station, it is indicated that this is a pre-scheduling.

Scheduling explicitly may be:
the base station sends control information to schedule the UE. For example, an LAA pre-scheduling domain for indicating whether the current scheduling is normal scheduling or pre-scheduling is newly added in the DCI format carried by the PDCCH, which is 1 bit or n bits. The UE determines whether this is a normal scheduling or a pre-scheduling according to the LAA pre-scheduling domain.

If the UE determines this is a normal scheduling according to the LAA pre-scheduling domain, then the UE performs the steps of normal scheduling shown in Fig. 3 and this flow is ended.

If the UE determines this is a pre-scheduling according to the LAA pre-scheduling domain, then it only needs to perform this flow.

In step 4021 to step 4022, the base station contends for an unlicensed carrier resource and at the same time the UE performs modulation coding.

After receiving the control information sent by the base station, the UE performs modulation coding according to the indication of the control information. For example, the UE performs modulation coding according to the MCS indicated by the received PDCCH.

In this step, the UE starts a timer and waits for the base station to preempt an unlicensed spectrum resource. The base station initiates resource preemption on one or more unlicensed carriers, such as CC1, CC2, ..., CCn. At the same time, the base station starts a timer and waits for the unlicensed spectrum resource preemption result.

Before the timer has timed out,

If the preemption is failed, then the base station continues to preempt resource; or the base station performs scheduling on a licensed carrier A_CC.

If the base station has preempted an unlicensed spectrum resource on one carrier, it is assumed that the base station has preempted an unlicensed carrier CC1, then it sends control information such as PDCCH/EPDCCH to notify the UE of the resource contention result. The resource contention result includes: indicating whether the base station has preempted an unlicensed carrier resource; indicating the preempted unlicensed carrier information, including a carrier number and a channel number and so on.

If the timer has timed out and the base station has not preempted unlicensed spectrum resource, the UE may attempt to perform scheduling and data transmission on a licensed spectrum resource, and if the licensed spectrum resource cannot be scheduled, then the UE continues to wait on the licensed spectrum resource;
or, the UE restarts the timer and waits for the base station to preempt resource on one or more other unlicensed carriers, such as CCn+1, CCn+2, ..., CCn+m, which can be repeated multiple times until the base station has preempted a resource;
or the UE discards the data.

In step 403, the base station schedules the UE to perform uplink data sending on an unlicensed carrier.

If in step 4021 to step 4022, the preemption of the base station is failed, then the base station continues to preempt resource; or the base station perform scheduling on a licensed carrier A_CC.

If in step 4021 to step 4022, the base station has preempted an unlicensed spectrum resource on one carrier, it is assumed that the base station has preempted an unlicensed carrier CC1, then the base station sends PDCCH to schedule the UE. After receiving the PDCCH notification, the UE performs modulation coding, and performs uplink data sending on the k^{th} subframe after receiving the PDCCH notification.

In this step, after receiving the PDCCH indication, the UE immediately sends the data on which modulation coding has been performed if the modulation coding is completed. If the modulation coding is not completed, then after the UE completes modulation coding, the data on which modulation coding has been performed is sent immediately on CC 1.

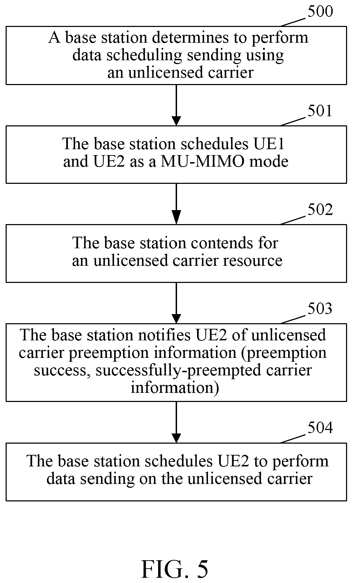

Fig. 5 is a flowchart of a third embodiment of data processing implementation according to the present invention. The third embodiment is a MU-MIMO mode flow, and as shown in Fig. 5, includes the following steps.

In step 500, a base station determines to perform data transmission using an unlicensed carrier.

In this step, the base station preparing to schedule the UE to send data on an unlicensed carrier can be that the base station decides to send data on an unlicensed carrier anytime, or the base station decides to schedule the UE to send data on an unlicensed carrier by determining the load on the licensed carrier, for example, the RB occupation rate has reached a certain preset threshold or the OI value is greater than a certain preset threshold.

In step 501, the base station schedules UE1 and UE2 as a MU-MIMO mode.

In step 502, the base station contends for an unlicensed carrier resource.

In this step, the base station attempts to preempt a resource on one or more unlicensed carriers, such as CC1, CC2, ..., CCn, if the base station has preempted an unlicensed carrier resource on one carrier, it is assumed that the preempted unlicensed carrier is CC1.

In step 503, the base station notifies the UE2 of the unlicensed carrier preemption information.

In this step, the base station may send control information (such as PDCCH) to notify the UE2, indicating to the UE2 that the base station has preempted an unlicensed carrier resource; and/or indicating the preempted unlicensed carrier information, including a carrier number and a channel number and so on.

In step 504, during next scheduling, the base station schedules the UE2 to perform data transmission on the preempted unlicensed carrier CC 1.

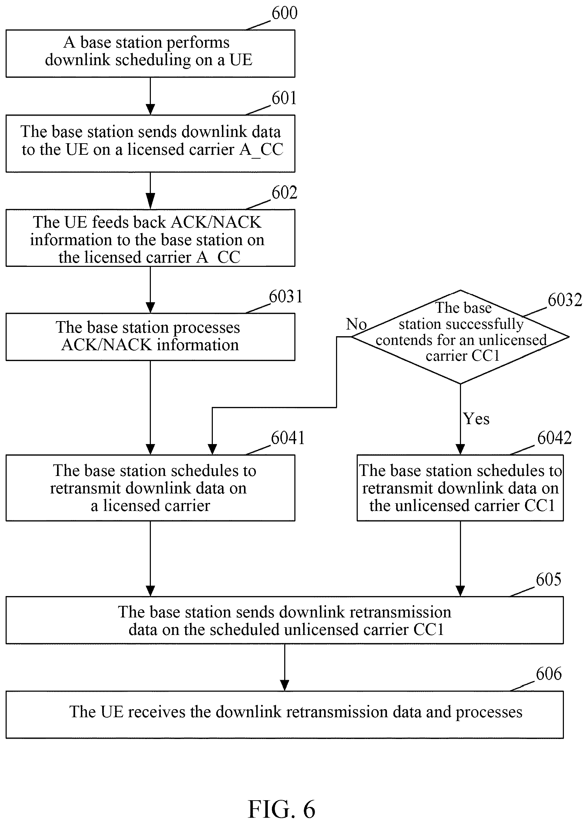

Fig. 6 is a flowchart of a fourth embodiment of data processing implementation according to the present invention. LTE downlink uses adaptive asynchronous HARQ, i.e., parameters used for each retransmission such as resource block, modulation manner, transmission block size, retransmission period and so on can be adjusted adaptively according to the wireless channel condition. The change of the modulation manner may cause the adjustment of the RB number, and thus it should be indicated to the UE through downlink resource allocation signalling. The fourth embodiment is a downlink HARQ flow of scheduling downlink initial transmission data on a licensed carrier, and as shown in Fig. 6, includes the following steps.

In step 600, a base station performs downlink scheduling on a UE.

In this step, the base station may send downlink scheduling to the UE through PDCCH or EPDCCH on a licensed carrier A_CC or an unlicensed carrier CC1.

In step 601, the base station sends downlink data to the UE on a licensed carrier.

In this step, the base station may send downlink data to the UE through PDSCH on a licensed carrier A_CC or an unlicensed carrier CC1.

In step 602, the UE feeds back ACK/NACK information to the base station on a licensed carrier.

In step 6031 to step 6032, the base station processes the ACK/NACK information and the base station contends for the unlicensed carrier CC1.

In this step, after receiving the PDSCH/PDCCH fed back by the UE, the base station demodulates and processes the ACK/NACK information in PDSCH/PDCCH.

In this step, since the base station may also perform scheduling on a licensed carrier, the step of the base station contending for an unlicensed carrier resource is an optional step, and the base station initiates resource preemption on one or more unlicensed carriers, such as CC1, CC2, ..., CCn. At the same time, the base station starts a timer and waits for the unlicensed spectrum resource preemption result.

In step 6041 to step 6042, the base station schedules downlink retransmission data on a licensed carrier, or the base station schedules downlink retransmission data on the unlicensed carrier CC 1.

In this step, the base station scheduling the retransmission data according to the ACK/NACK information and downlink resource allocation condition includes: in the case that initial transmission is performed on a licensed carrier: the base station schedules the UE to perform retransmission on a licensed carrier, for example, the base station sends PDCCH to schedule the UE to receive retransmission data on A_CC; or the base station schedules the UE to receive retransmission data on an unlicensed carrier, for example, the base station preempts an unlicensed carrier resource CC1, then the base station sends PDCCH to schedule the UE to receive retransmission data on the unlicensed carrier CC1.

If there is no available resource, the base station abandons retransmission or terminates retransmission.

In the case that initial transmission is performed on an unlicensed carrier: the base station schedules the UE to receive retransmission data on the original unlicensed carrier, for example, the unlicensed carrier resource CC1 is still available, then the base station sends PDCCH to schedule the UE to receive retransmission data on the unlicensed carrier CC1; or the base station schedules the UE to receive retransmission data on another available unlicensed carrier, for example, the unlicensed carrier resource CC 1 is unavailable, the base station detects whether there are other available unlicensed carriers except CC1 in a candidate carrier set {CC1, CC2, ..., CCn}. For example, if it is found that the unlicensed carrier CC2 is available, then the base station sends PDCCH to schedule the UE to receive retransmission data on the unlicensed carrier CC2.

If the base station schedules the UE to receive retransmission data on a licensed carrier, for example, for a service of which the quality of service (QoS) is greater than a certain threshold, the base station sends PDCCH to schedule the UE to receive retransmission data on A_CC.

In this step, the base station initiates resource preemption on an unlicensed carrier, if the preemption is successful, then the base station schedules the UE to receive retransmission data on the preempted unlicensed carrier, for example, the licensed carrier resource is in short and unavailable, the base station attempts to preempt resource on one or more unlicensed carriers, and the preemption resource candidate set may contain CC1, for example, preempting a resource in {CC1, CC2, ..., CCn}, and may not contain CC1, for example, preempting a resource in {CC2,..., CCn}.

This resource preemption is of high priority, for example the idle frame listening waiting time of the unlicensed carrier resource can be shortened. If the base station has preempted an unlicensed carrier resource on one carrier, which is assumed as CC2, the base station sends control information (such as PDCCH) to notify the UE, which indicates that the base station has preempted an unlicensed carrier resource; and/or indicates that the preempted unlicensed carrier information includes a carrier number, a channel number and so on. The base station sends PDCCH to schedule the UE to receive retransmission data on CC2.

If there is no available resource, the base station abandons retransmission or terminates retransmission; if the retransmission has not started, then retransmission can be abandoned, for example, before HARQ starts, the unlicensed spectrum resource of the base station is released, then the base station will not perform HARQ retransmission; and after the current retransmission is abandoned and before the next retransmission moment arrives, the base station continues to preempt a resource , and the UE starts the timer, if the base station has preempted a resource before the timer has timed out, then the base station performs the current downlink retransmission, and if the base station has not preempted unlicensed carrier resource before the timer has timed out, then the base station waits for the next retransmission moment to attempt again until the maximum retransmission number is reached.

For example, before the first HARQ retransmission, the unlicensed spectrum resource of the base station has been released, then until the second HARQ retransmission moment, the base station preempts a resource again, and if it has preempted a resource at the second time, the base station performs the second downlink retransmission. If the preemption is failed, then it waits for the third retransmission moment to arrive. This process continues until the maximum retransmission number is reached, for example, the maximum retransmission number is 4, and when the fourth retransmission moment is reached, the base station still has not preempted resource, then the last retransmission will be abandoned.

Once the base station cannot preempt resource, then the current and all subsequent retransmissions will be abandoned. For example, before the second HARQ retransmission, the unlicensed spectrum resource of the base station has been released, and the maximum retransmission number is 4, then the base station abandons the second, the third and the fourth retransmissions.

If the initial transmission carrier and the retransmission carrier are different, since the available frequency resources and time domain resources of the initial transmission carrier and the retransmission carrier may be different, the resource block (RB) and the available subframe location during retransmission may also change accordingly. The base station should perform recalculation and embody this change in the control information for scheduling, such as PDCCH.

In step 605, the base station sends downlink retransmission data on the scheduled carrier.

In this step, the base station may send downlink retransmission data to the UE through PDSCH.

In step 606, the UE receives the retransmission data and processes.

The UE receives the downlink retransmission data, completes modulation and demodulation, and feeds back ACK/NACK information for this retransmission again through PUSCH/PUCCH.

It should be noted that if the retransmission result is still incorrect, then step 602 to step 606 are repeated until the maximum retransmission number is reached.

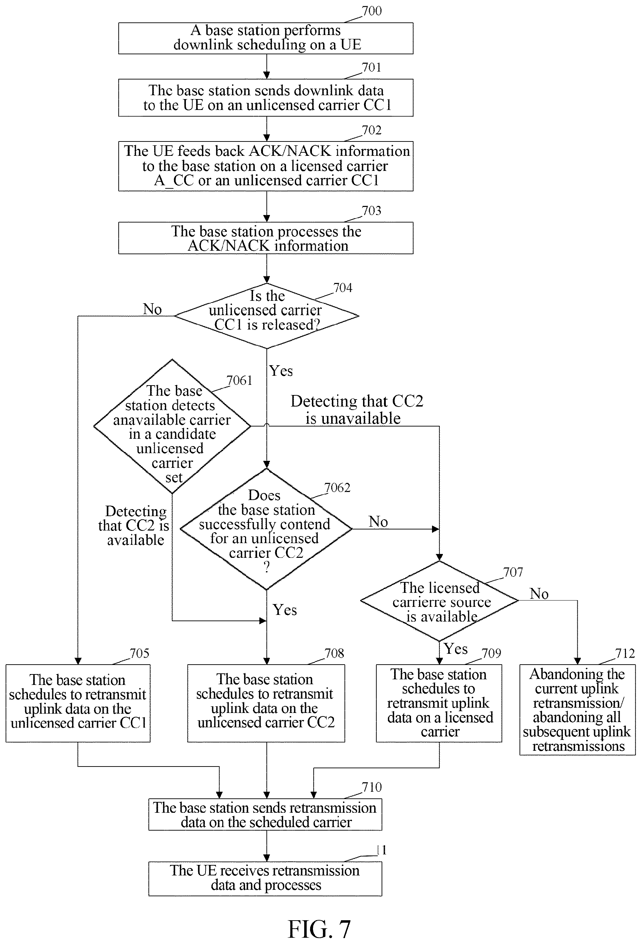

Fig. 7 is a flowchart of a fifth embodiment of data processing implementation according to the present invention. LTE uplink uses non-adaptive synchronous HARQ, i.e., a predefined transmission format is used for each retransmission, and the sending end and the receiving end know parameters such as resource amount/location, modulation manner of each retransmission in advance. The fifth embodiment is a downlink HARQ flow of scheduling downlink initial transmission data on an unlicensed carrier. As shown in Fig. 7, it includes the following steps.

In step 700, a base station performs downlink scheduling on a UE.

In this step, the base station may send downlink scheduling to the UE through PDCCH or EPDCCH on a licensed carrier A_CC or an unlicensed carrier CC1.

In step 701, the base station sends downlink data to the UE on the unlicensed carrier CC1.

In step 702, the UE feeds back ACK/NACK information to the base station on a licensed carrier or the unlicensed carrier CC1.

In this step, for example, the UE sends uplink data to the base station through a physical uplink shared channel PUSCH on a licensed carrier A_CC or the unlicensed carrier CC1. For example, the base station feeds back ACK/NACK information of the previous transmission to the UE through physical HARQ indication channel PHICH on the licensed carrier A_CC or the unlicensed carrier CC 1.

In step 703, the base station processes the ACK/NACK information.

In step 704, whether the unlicensed carrier CC1 has been released, if not released, then step 705 will be performed, if released, step 7062 will be performed.

In step 705, the base station schedules to perform downlink retransmission on the unlicensed carrier CC1 and then step 710 will be performed.

In step 7061 to step 7062, the base station detects an available carrier in a candidate unlicensed carrier set, whether the base station contends for other unlicensed carriers successfully, if an available carrier is detected and the base station has preempted, step 708 will be performed, if an available carrier is not detected and the preemption fails, step 707 will be performed.

In this step, the base station initiates resource preemption on one or more unlicensed carriers, such as CC1, CC2, ..., CCn. At the same time, the base station starts a timer and waits for the unlicensed spectrum resource preemption result.

In step 707, it is determined whether the licensed carrier is available, if yes, then step 709 will be performed, otherwise, step 712 will be performed.

In step 708, the base station schedules to perform downlink retransmission on an unlicensed carrier CC2 and then step 710 will be performed.

In step 709, the base station schedules to perform downlink retransmission on a licensed carrier and then step 710 will be performed.

In step 710, the base station sends downlink retransmission data on the scheduled carrier.

In step 711, the UE receives the retransmission data and processes. This flow is ended.

In step 712, the base station abandons retransmission or terminates retransmission.

Those skilled in the art may understand that all or some steps of the above embodiments may be implemented by computer program flows, the computer program may be stored in a computer-readable storage medium and executed on a corresponding hardware platform (such as system, apparatus, device, means and so on), and when being executed, include one of the steps of the method embodiment or a combination thereof.

Alternatively, all or some steps of the above embodiments may also be implemented with an integrated circuit, and these steps may be made into individual integrated circuit modules respectively or some modules or steps thereof are made into a single integrated circuit module. As such, the present invention is not limited to any specific combinations of hardware and software.

Various devices/functional modules/functional units in the above embodiments may be implemented with a general-purpose computer device which can be integrated on a single computer device and may also be distributed on a network consisting of a plurality of computer devices.

Various devices/functional modules/functional units in the above embodiments may be stored in a computer-readable storage medium if being implemented in a form of software functional modules and sold or used as independent products. The above-mentioned computer-readable storage medium may be a read-only memory, magnetic disk or optical disk and so on.

### Industrial Applicability

Also, in the embodiments of the present invention, the limited occupation time of an unlicensed spectrum can be in full use and the utilization of the preempted unlicensed spectrum resource is improved.

## Claims

1. A method for implementing data processing, comprising: a base station determining to perform data transmission using an unlicensed carrier; and notifying a user equipment UE of scheduling information.

2. The method according to claim 1, further comprising: the UE determining that the base station pre-schedules the UE according to a received notification;
the UE performing modulation coding according to the scheduling and meanwhile the base station preempts an unlicensed carrier resource; and
the UE sending data on which modulation coding has been performed on the preempted unlicensed carrier resource.

3. The method according to claim 1, wherein a base station determining to perform data transmission using an unlicensed carrier comprises:
the base station deciding at any time to perform data transmission on the unlicensed carrier;
or determining to perform data transmission on the unlicensed carrier according to a usage condition of a licensed carrier.

4. The method according to claim 1, wherein notifying a UE of scheduling information comprises: notifying the UE of the scheduling information by sending control information to the UE.

5. The method according to claim 1, wherein the base station notifies the UE implicitly or explicitly, wherein
said notifying implicitly is: the base station notifying the UE of whether to perform data transmission using the unlicensed carrier through a carrier indication domain in the control information; and
said notifying explicitly is: the base station notifying the UE of whether to perform data transmission using the unlicensed carrier through a newly added pre-scheduling domain in the control information.

6. The method according to claim 4 or 5, wherein the control information is sent through a physical downlink control channel PDCCH or an enhanced physical downlink control channel EPDCCH.

7. The method according to claim 2, wherein the base station notifies the UE implicitly, and said notifying implicitly is: the base station notifying the UE of whether to perform data transmission using the unlicensed carrier through a carrier indication domain in the control information;
if the control information sent by the base station does not comprise carrier indication domain, then it is indicated that current scheduling is normal scheduling; and
the UE determines whether a target carrier of the current scheduling is a licensed carrier or an unlicensed carrier according to the carrier indication domain in the control information from the base station, and if being a licensed carrier, then it is indicated that the current scheduling is normal scheduling.

8. The method according to claim 7, wherein the UE determining that the base station pre-schedules the UE comprises:
when the UE determines that the target carrier is an unlicensed carrier, the UE determining whether the unlicensed carrier resource has been preempted by the base station successfully, and if the unlicensed carrier has been preempted by the base station successfully currently, then it is indicated that current scheduling is normal scheduling, and if the unlicensed carrier has not been preempted by the base station successfully currently, then it is indicated that the current scheduling is pre-scheduling.

9. The method according to claim 1, wherein the base station notifies the UE explicitly, and said notifying explicitly is: the base station notifying the UE of whether to perform data transmission using the unlicensed carrier through a newly added pre-scheduling domain in the control information;
if the newly added pre-scheduling domain shows that present scheduling is pre-scheduling, then it is indicated that the current scheduling is pre-scheduling; and
if the newly added pre-scheduling domain shows that present scheduling is normal scheduling, then it is indicated that the current scheduling is normal scheduling.

10. The method according to claim 7 or 9, further comprising:
the base station initiating resource preemption on one or more unlicensed carriers, and meanwhile the base station starts a timer and waits for an unlicensed carrier resource preemption result, and if the preemption is successful, then the scheduling is normal scheduling and then performing the normal scheduling processing.

11. The method according to claim 10, further comprising:
if the preemption is unsuccessful, the base station continuing to preempt a resource until the preemption is successful or notifying the UE that the current scheduling is pre-scheduling based on an unlicensed carrier, and continuing to perform the step of the UE performing modulation coding according to the scheduling meanwhile the base station preempts an unlicensed carrier resource;
or the base station performing scheduling on a licensed carrier and notifying the UE.

12. The method according to claim 7 or 9, wherein the base station preempting an unlicensed carrier comprises:
the UE starting a timer and waiting for the base station to preempt an unlicensed spectrum resource; and
before the timer has timed out, the base station attempting to preempt a resource on one or more unlicensed carriers, and if the base station has preempted an unlicensed spectrum resource on one carrier, the base station sending a preemption resource notification to the UE and then performing the step of the UE sending data on which modulation coding has been performed on the preempted unlicensed carrier resource.

13. The method according to claim 12, further comprising:
if the timer has timed out and the base station has not preempted an unlicensed carrier resource,
the UE attempting to perform scheduling and data transmission on a licensed spectrum resource, and if the licensed spectrum resource cannot be scheduled, then the UE continuing to wait for a scheduling chance on the licensed spectrum resource; and if the licensed spectrum resource can realize scheduling, then performing normal scheduling;
or, the UE restarting the timer and waiting for the base station to preempt a resource on one or more other unlicensed carriers until the base station has preempted a resource, and then performing the step of the UE sending data on which modulation coding has been performed on the preempted unlicensed carrier resource;
or the UE discarding this data and ending a current flow.

14. The method according to claim 2, wherein the UE sending data on which modulation coding has been performed on the preempted unlicensed carrier resource comprises:
after the UE receives an indication that the unlicensed carrier has been preempted, if the modulation coding has been performed, then sending data on which modulation coding has been performed immediately using the preempted unlicensed carrier resource; and
if the modulation coding has not been performed, then after the UE has performed modulation coding, sending data on which modulation coding has been performed immediately using the preempted unlicensed carrier resource.

15. The method according to any one of claims 1 to 3, 7 to 8, 11 or 14, further comprising:
when the base station schedules another UE to perform data transmission on an unlicensed spectrum, the base station scheduling the UE and the other UE as a multi-user multi-input multi-output MU-MIMO mode;
the base station attempting to preempt a resource on one or more unlicensed carriers, and after the base station successfully preempts an unlicensed carrier resource, notifying the other UE; and
the base station scheduling the other UE to perform data transmission on the currently preempted unlicensed carrier during next scheduling.

16. The method according to claim 15, further comprising:
if the base station has not preempted an unlicensed carrier resource, the other UE attempting to be scheduled as a single user mode on a licensed spectrum resource to perform data transmission;
or if the base station has not preempted an unlicensed carrier resource, the other UE attempting to continue to be scheduled together with the UE as a MU-MIMO mode on a licensed spectrum resource to perform data transmission; and if the licensed spectrum resource can realize scheduling, then the other UE performing normal scheduling processing;
or, if the base station has not preempted an unlicensed carrier resource, the other UE restarting the timer and waiting for the base station to continue to preempt a resource on one or more other unlicensed carriers until the base station has preempted a resource, and then the other UE sending data on which modulation coding has been performed on the preempted unlicensed carrier resource.

17. The method according to any one of claims 1 to 3, 7 to 8, 11 or 14, further comprising: the UE feeding back ACK/NACK information to the base station on a licensed carrier or an unlicensed carrier.

18. The method according to claim 17, wherein the UE feeding back ACK/NACK information to the base station on a licensed carrier or an unlicensed carrier comprises:
if the base station has not preempted an unlicensed carrier resource, the UE feeding back ACK/NACK information to the base station on a licensed carrier;
or if the base station has preempted an unlicensed carrier resource,
if the UE is allowed to perform uplink sending on the unlicensed carrier and the unlicensed carrier resource is available, the UE feeding back ACK/NACK information of previous transmission to the base station on the unlicensed carrier through a physical uplink shared channel PUSCH or physical uplink control channel PUCCH; and
if the UE is not allowed to perform uplink sending on the unlicensed carrier or the unlicensed carrier resource is unavailable, the UE feeding back ACK/NACK information of previous transmission to the base station on the unlicensed carrier through PUSCH or PUCCH.

19. The method according to claim 16, further comprising: the ACK/NACK information received by the base station showing that data sending is failed, the base station performing downlink scheduling and downlink retransmission on the UE, wherein
the base station performing downlink scheduling and downlink retransmission on the UE comprises:
after receiving the ACK/NACK information fed back by the UE, the base station demodulating and processing the ACK/NACK; and
scheduling retransmission data according to the demodulated and processed ACK/NACK information and downlink resource allocation condition.

20. The method according to claim 19, wherein scheduling retransmission data according to the demodulated and processed ACK/NACK information and downlink resource allocation condition comprises:
if the base station schedules the UE to receive downlink initial transmission data on a licensed carrier and the licensed carrier is available, the base station continuing to schedule the UE to receive downlink retransmission data on the licensed carrier; or the base station preempting an unlicensed carrier while receiving the ACK/NACK information fed back by the UE, and scheduling the UE to receive downlink retransmission data on the unlicensed carrier when the unlicensed carrier resource has been preempted;
or if the base station schedules the UE to receive downlink initial transmission data on an unlicensed carrier and the unlicensed carrier is available, the base station continuing to schedule the UE to receive downlink retransmission data on the unlicensed carrier;
or if the base station schedules the UE to receive downlink initial transmission data on an unlicensed carrier but the unlicensed carrier is unavailable, the base station preempting an unlicensed carrier while receiving the ACK/NACK information fed back by the UE, and scheduling the UE to receive downlink retransmission data on another unlicensed carrier when the other unlicensed carrier resource has been preempted;
or if the base station schedules the UE to receive downlink initial transmission data on an unlicensed carrier but the unlicensed carrier is unavailable, the base station scheduling the UE to receive downlink retransmission data on a licensed carrier;
or if there is no available resource, the base station abandoning downlink retransmission or terminating downlink retransmission.

21. The method according to claim 20, further comprising:
when a carrier used to receive the downlink initial transmission data and a carrier used to receive the downlink retransmission data are different, the base station recalculating available subframe locations and resource blocks which can be used for downlink retransmission, and notifying the UE through control information.

22. The method according to claim 20, further comprising:
when a carrier used to receive the downlink initial transmission data and a carrier used to receive the downlink retransmission data are different, an MAC entity which manages an HARQ process mapping to the carrier of the downlink retransmission data.

23. The method according to any one of claims 1 to 3, 7 to 8, 11 or 14, further comprising:
the base station feeding back ACK/NACK information to the UE on a licensed carrier or an unlicensed carrier.

24. The method according to claim 23, wherein the base station feeding back ACK/NACK information to the UE on a licensed carrier or an unlicensed carrier comprises:
the base station sending uplink scheduling to the UE through a control channel, wherein the control channel comprises PDCCH or enhanced physical downlink control channel EPDCCH;
the base station feeding back ACK/NACK information to the UE through the control channel on a licensed carrier or an unlicensed carrier, wherein the control channel is a physical HARQ indication channel PHICH.

25. The method according to claim 23, further comprising: the ACK/NACK information showing that data sending is failed, the base station performing uplink scheduling and uplink retransmission on the UE, wherein
the base station performing uplink scheduling and uplink retransmission on the UE comprises:
after receiving the ACK/NACK information fed back by the base station, the UE demodulating and processing the ACK/NACK; and
under scheduling by the base station, performing uplink data retransmission according to the demodulated and processed ACK/NACK information and uplink resource allocation condition.

26. The method according to claim 25, wherein under the scheduling by the base station, performing uplink data retransmission according to the demodulated and processed ACK/NACK information and uplink resource allocation condition comprises:
if the base station schedules the UE to send uplink initial transmission data on a licensed carrier and the licensed carrier is available, the base station continuing to schedule the UE to send uplink retransmission data on the licensed carrier; or the base station preempting an unlicensed carrier while sending the ACK/NACK information to the UE and scheduling the UE to send uplink retransmission data on the unlicensed carrier when the unlicensed carrier resource has been preempted;
or if the base station schedules the UE to send uplink initial transmission data on an unlicensed carrier and the unlicensed carrier is available, the base station continuing to schedule the UE to send uplink retransmission data on the unlicensed carrier;
or if the base station schedules the UE to send uplink initial transmission data on an unlicensed carrier but the unlicensed carrier is unavailable, the base station preempting an unlicensed carrier while feeding back the ACK/NACK information to the UE and scheduling the UE to send uplink retransmission data on another unlicensed carrier when the other unlicensed carrier resource has been preempted;
or if the base station schedules the UE to send uplink initial transmission data on an unlicensed carrier but the unlicensed carrier is unavailable, the base station scheduling the UE to send uplink retransmission data on a licensed carrier;
or if there is no available resource, the base station abandoning uplink retransmission or terminating uplink retransmission.

27. The method according to claim 26, further comprising:
when a carrier used to receive the uplink initial transmission data and a carrier used to receive the uplink retransmission data are different, the base station recalculating available subframe locations and resource blocks which can be used for uplink retransmission, and notifying the UE through control information.

28. The method according to claim 26, further comprising:
when a carrier used to receive the uplink initial transmission data and a carrier used to receive the uplink retransmission data are different, an MAC entity which manages an HARQ process mapping to the carrier of the uplink retransmission data.

29. The method according to claim 20 or 26, further comprising:
when the base station has preempted an unlicensed carrier resource, the base station sending a notification to the UE to notify the UE of a preemption result that an unlicensed spectrum resource has been preempted, which indicates that the preempted unlicensed carrier information comprises a carrier number, a channel number and a cell number corresponding to the carrier.

30. The method according to claim 2, further comprising: before the UE sends data on which modulation coding has been performed on the preempted unlicensed carrier resource, if the unlicensed carrier resource is unavailable,
the base station notifying the UE that the unlicensed carrier has been released;
or the base station adjusting the UE to use a licensed carrier or reselect an available unlicensed carrier or re-preempt an unlicensed carrier.

31. A method for implementing data processing, comprising: when a base station schedules a UE of which an available carrier resource has changed to perform data transmission on an unlicensed carrier,
the base station scheduling a scheduled UE and the current UE of which an available carrier resource has changed as a multi-user multi-input multi-out (MU-MIMO) mode;
the base station attempting to preempt a resource on one or more unlicensed carriers, and after the base station successfully preempts an unlicensed carrier resource, notifying the UE of which an available carrier resource has changed; and
during next scheduling, the base station scheduling the UE of which an available carrier resource has changed to perform data transmission on the currently preempted unlicensed carrier.

32. The method according to claim 31, further comprising:
if the base station has not preempted an unlicensed carrier resource, the UE of which an available carrier resource has changed attempting to be scheduled as a single user mode on a licensed spectrum resource to perform data transmission;
or if the base station has not preempted an unlicensed carrier resource, the UE of which an available carrier resource has changed attempting to continue to be scheduled together with the scheduled UE as a MU-MIMO mode on a licensed spectrum resource to perform data transmission; and if the licensed spectrum resource can realize scheduling, then the UE of which an available carrier resource has changed performing normal scheduling processing;
or, if the base station has not preempted an unlicensed carrier resource, the UE of which an available carrier resource has changed restarting a timer and waiting for the base station to continue to preempt a resource on one or more other unlicensed carriers until the base station has preempted a resource, and then the UE of which an available carrier resource has changed sending data on which modulation coding has been performed on the preempted unlicensed carrier resource.

33. A method for implementing data processing, comprising: a base station performing downlink scheduling and downlink initial transmission data sending on a licensed carrier or an unlicensed carrier;
the UE feeding back ACK/NACK information to the base station on a licensed carrier or an unlicensed carrier; and
the ACK/NACK information received by the base station showing that data sending is failed, the base station performing downlink scheduling and downlink retransmission on the UE.

34. The method according to claim 33, wherein the UE feeding back ACK/NACK information to the base station on a licensed carrier or an unlicensed carrier comprises:
if the base station has not preempted an unlicensed carrier resource, the UE feeding back ACK/NACK information to the base station on a licensed carrier;
or if the base station has preempted an unlicensed carrier resource,
if the UE is allowed to perform uplink sending on the unlicensed carrier and the unlicensed carrier resource is available, the UE feeding back ACK/NACK information of previous transmission to the base station on the unlicensed carrier through a physical uplink shared channel PUSCH or physical uplink control channel PUCCH;
if the UE is not allowed to perform uplink sending on the unlicensed carrier or the unlicensed carrier resource is unavailable, the UE feeding back ACK/NACK information of the previous transmission to the base station on the unlicensed carrier through PUSCH or PUCCH.

35. The method according to claim 33, wherein the base station performing downlink scheduling and downlink retransmission on the UE comprises:
after receiving the ACK/NACK information fed back by the UE, the base station demodulating and processing the ACK/NACK; and
scheduling retransmission data according to the demodulated and processed ACK/NACK information and downlink resource allocation condition.

36. The method according to claim 35, wherein scheduling retransmission data according to the demodulated and processed ACK/NACK information and downlink resource allocation condition comprises:
if the base station schedules the UE to receive downlink initial transmission data on a licensed carrier and the licensed carrier is available, the base station continuing to schedule the UE to receive downlink retransmission data on the licensed carrier; or the base station preempting an unlicensed carrier while receiving the ACK/NACK information fed back by the UE, and scheduling the UE to receive downlink retransmission data on the unlicensed carrier when the unlicensed carrier resource has been preempted;
or if the base station schedules the UE to receive downlink initial transmission data on an unlicensed carrier and the unlicensed carrier is available, the base station continuing to schedule the UE to receive downlink retransmission data on the unlicensed carrier;
or if the base station schedules the UE to receive downlink initial transmission data on an unlicensed carrier but the unlicensed carrier is unavailable, the base station preempting an unlicensed carrier while receiving the ACK/NACK information fed back by the UE, and scheduling the UE to receive downlink retransmission data on another unlicensed carrier when the other unlicensed carrier resource has been preempted;
or if the base station schedules the UE to receive downlink initial transmission data on an unlicensed carrier but the unlicensed carrier is unavailable, the base station scheduling the UE to receive downlink retransmission data on a licensed carrier;
or if there is no available resource, the base station abandoning downlink retransmission or terminating downlink retransmission.

37. The method according to claim 36, further comprising:
when a carrier used to receive the downlink initial transmission data and a carrier used to receive the downlink retransmission data are different, the base station recalculating available subframe locations and resource blocks which can be used for downlink retransmission, and notifying the UE through control information.

38. The method according to claim 36, further comprising:
when a carrier used to receive the downlink initial transmission data and a carrier used to receive the downlink retransmission data are different, an MAC entity which manages an HARQ process mapping to the carrier of the downlink retransmission data.

39. The method according to claim 36, further comprising: when the base station has preempted an unlicensed carrier resource, the base station sending a notification to the UE to notify the UE of a preemption result that an unlicensed spectrum resource has been preempted, which indicates that the preempted unlicensed carrier information comprises a carrier number, a channel number and a cell number corresponding to the carrier.

40. A method for implementing data processing, comprising:
a base station performing uplink scheduling on a licensed carrier or an unlicensed carrier and a UE sending uplink initial transmission data to the base station on a licensed carrier or an unlicensed carrier;
the base station feeding back ACK/NACK information to the UE on a licensed carrier or an unlicensed carrier; and
the ACK/NACK information showing that data sending is failed, and the method further comprising: the base station performing uplink scheduling and uplink retransmission on the UE.

41. The method according to claim 40, wherein the base station feeding back ACK/NACK information to the UE on a licensed carrier or an unlicensed carrier comprises:
the base station sending uplink scheduling to the UE through a control channel, wherein the control channel comprises a physical downlink control channel PDCCH or an enhanced physical downlink control channel EPDCCH; and
the base station feeding back ACK/NACK information to the UE through the control channel on a licensed carrier or an unlicensed carrier, wherein the control channel is a physical HARQ indication channel PHICH.

42. The method according to claim 40, wherein the base station performing uplink scheduling and uplink retransmission on the UE comprises:
after receiving the ACK/NACK information fed back by the base station, the UE demodulating and processing the ACK/NACK; and
under scheduling by the base station, performing uplink data retransmission according to the demodulated and processed ACK/NACK information and uplink resource allocation condition.

43. The method according to claim 42, wherein under scheduling by the base station, performing uplink data retransmission according to the demodulated and processed ACK/NACK information and uplink resource allocation condition comprises:
if the base station schedules the UE to send uplink initial transmission data on a licensed carrier and the licensed carrier is available, the base station continuing to schedule the UE to send uplink retransmission data on the licensed carrier; or the base station preempting an unlicensed carrier while sending the ACK/NACK information to the UE, and scheduling the UE to send uplink retransmission data on the unlicensed carrier when the unlicensed carrier resource has been preempted;
or if the base station schedules the UE to send uplink initial transmission data on an unlicensed carrier and the unlicensed carrier is available, the base station continuing to schedule the UE to send uplink retransmission data on the unlicensed carrier;
or if the base station schedules the UE to send uplink initial transmission data on an unlicensed carrier but the unlicensed carrier is unavailable, the base station preempting an unlicensed carrier while feeding back the ACK/NACK information to the UE, and scheduling the UE to send uplink retransmission data on another unlicensed carrier when the other unlicensed carrier resource has been preempted;
or if the base station schedules the UE to send uplink initial transmission data on an unlicensed carrier but the unlicensed carrier is unavailable, the base station scheduling the UE to send uplink retransmission data on a licensed carrier;
or if there is no available resource, the base station abandoning uplink retransmission or terminating uplink retransmission.

44. The method according to claim 43, further comprising:
when the base station has preempted an unlicensed carrier resource, the base station sending a notification to the UE to notify the UE of a preemption result that an unlicensed spectrum resource has been preempted, which indicates that the preempted unlicensed carrier information comprises a carrier number, a channel number and a cell number corresponding to the carrier.

45. A base station, comprising:
a sending unit arranged to determine to perform data transmission using an unlicensed carrier and notify a UE of scheduling information;
a resource preemption unit arranged to preempt an unlicensed carrier resource; and
a scheduling unit arranged to schedule the UE to send data on which modulation coding has been performed on the preempted unlicensed carrier resource.

46. The base station according to claim 45, wherein
the resource preemption unit is further arranged to preempt a resource on one or more other unlicensed carriers until the base station has preempted a resource.

47. The base station according to claim 45, wherein
the sending unit is further arranged to notify the UE of a preemption result or release result of the unlicensed carrier.

48. The base station according to any one of claims 45 to 47, wherein when the base station prepares to schedule another UE to perform data transmission on an unlicensed spectrum,
the scheduling module is further arranged to schedule the UE and another UE which is prepared to be scheduled currently as a MU-MIMO mode; the resource preemption unit is arranged to attempt to preempt a resource on one or more unlicensed carriers; the sending unit is further arranged to notify the other UE when the resource preemption unit successfully preempts an unlicensed carrier resource; and the scheduling module is further arranged to schedule the other UE to perform data transmission on the currently preempted unlicensed carrier during next scheduling.

49. The base station according to any one of claims 45 to 47, further comprising:
a receiving unit arranged to receive ACK/NACK information;
a demodulation and processing unit arranged to demodulate and process the ACK/NACK when the ACK/NACK information shows that data sending is failed; and
the scheduling unit is further arranged to schedule retransmission data according to the demodulated and processed ACK/NACK information and downlink resource allocation condition.

50. The base station according to claim 49, wherein
when the scheduling unit schedules the UE to receive downlink initial transmission data on a licensed carrier and the licensed carrier is available, the scheduling unit continues to schedule the UE to receive downlink retransmission data on the licensed carrier; or the resource preemption unit preempts an unlicensed carrier while the receiving unit receives the ACK/NACK information fed back by the UE, and the scheduling unit schedules the UE to receive downlink retransmission data on an unlicensed carrier when the unlicensed carrier resource has been preempted;
or the scheduling unit is arranged to, when the UE is scheduled to receive downlink initial transmission data on an unlicensed carrier and the unlicensed carrier is available, continue to schedule the UE to receive downlink retransmission data on the unlicensed carrier;
or when the scheduling unit schedules the UE to receive downlink initial transmission data on an unlicensed carrier but the unlicensed carrier is unavailable, the resource preemption unit preempts an unlicensed carrier while the receiving unit receives the ACK/NACK information fed back by the UE, and the scheduling unit schedules the UE to receive downlink retransmission data on another unlicensed carrier when the other unlicensed carrier resource has been preempted;
or the scheduling unit is arranged to, when the base station schedules the UE to receive downlink initial transmission data on an unlicensed carrier but the unlicensed carrier is unavailable, schedule, by the base station, the UE to receive downlink retransmission data on a licensed carrier;
or the scheduling unit is arranged to, when there is no available resource, abandon or terminate, by the base station, downlink retransmission.

51. The base station according to any one of claims 45 to 47, wherein the scheduling unit is further arranged to perform uplink scheduling on a licensed carrier or an unlicensed carrier and feed back ACK/NACK information to the UE on a licensed carrier or an unlicensed carrier;
when the fed back ACK/NACK information shows that data sending is failed,
schedule the UE to perform uplink data retransmission according to uplink resource allocation condition.

52. The base station according to claim 51, wherein
when the scheduling unit schedules the UE to send uplink initial transmission data on a licensed carrier and the licensed carrier is available, the scheduling unit continues to schedule the UE to send uplink retransmission data on the licensed carrier; or the resource preemption unit preempts an unlicensed carrier while sending the ACK/NACK information to the UE, and the scheduling unit schedules the UE to send uplink retransmission data on the unlicensed carrier when the unlicensed carrier resource has been preempted;
or the scheduling unit is arranged to schedule, by the base station, the UE to send uplink initial transmission data on an unlicensed carrier and the unlicensed carrier is available, continue, by the base station, to schedule the UE to send uplink retransmission data on the unlicensed carrier;
or when the scheduling unit schedules the UE to send uplink initial transmission data on an unlicensed carrier but the unlicensed carrier is unavailable, the resource preemption unit preempts an unlicensed carrier while the scheduling unit feeds back ACK/NACK to the UE, and the resource scheduling unit schedules the UE to send uplink retransmission data on another unlicensed carrier when the other unlicensed carrier resource has been preempted;
or the scheduling unit is arranged to, when the UE is scheduled to send uplink initial transmission data on an unlicensed carrier but the unlicensed carrier is unavailable, schedule the UE to send uplink retransmission data on a licensed carrier;
or the scheduling unit is arranged to, when there is no available resource, abandon uplink retransmission or terminate uplink retransmission.

53. The base station according to claim 45, wherein before the scheduling unit schedules the UE to send data on which modulation coding has been performed on the preempted unlicensed carrier resource, if the unlicensed carrier resource is unavailable, the sending unit is further arranged to:
notify the UE that the unlicensed carrier has been released;
or the scheduling unit is further arranged to adjust the UE to use a licensed carrier or reselect an available unlicensed carrier or re-preempt an unlicensed carrier.

54. A user equipment, comprising:
a receiving unit arranged to receive scheduling information sent by a base station;
a modulation coding unit arranged to determine that the base station pre-schedules the user equipment according to the scheduling information and perform modulation coding according to the scheduling;
a sending unit arranged to send data on which modulation coding has been performed on an unlicensed carrier resource preempted by the base station.

55. The user equipment according to claim 54, wherein the sending unit is further arranged to send data on which modulation coding has been performed on a licensed carrier.

56. The user equipment according to claim 54 or 55, wherein the sending unit is further arranged to feed back ACK/NACK information to the base station on a licensed carrier or an unlicensed carrier.

57. The user equipment according to claim 56, wherein the receiving unit is further arranged to receive ACK/NACK information fed back by the base station on a licensed carrier or an unlicensed carrier.

58. The user equipment according to claim 57, further comprising:
a demodulation and processing unit arranged to demodulate and process the ACK/NACK information fed back by the base station;
when the ACK/NACK information fed back by the base station and received by the receiving unit shows that data sending is failed,
the sending unit is further arranged to, under scheduling by the base station, perform uplink data retransmission according to the demodulated and processed ACK/NACK information and uplink resource allocation condition.

59. A computer-readable storage medium storing program instructions, which, when executed, are enabled to implement the method of any one of claims 1 to 44.
